# EUROPÄISCHE PATENTSCHRIFT

(11) **EP 4 155 237 B1**
(45) Veröffentlichungstag und Bekanntmachung des Hinweises auf die Patenterteilung: **20.11.2024**
(21) Anmeldenummer: 22179139.5
(22) Anmeldetag: 15.06.2022
(51) Int. Cl.: B65G 15/00, B65G 15/22, B65G 47/68, B65G 47/71, B65G 47/08, B65G 47/82, B65G 47/88, B65G 47/51

(54) **VORRICHTUNG UND VERFAHREN ZUR SEQUENZIERUNG VON LADEEINHEITEN IN EINER VORBESTIMMTEN REIHENFOLGE**
DEVICE AND METHOD FOR SEQUENCING OF LOADING UNITS IN A PREDETERMINED ORDER
DISPOSITIF ET PROCÉDÉ DE SÉQUENÇAGE DES UNITÉS DE CHARGEMENT DANS UN ORDRE PRÉDÉTERMINÉ

(30) Priorität: 22.09.2021 DE 102021124545
(43) Veröffentlichungstag der Anmeldung: 29.03.2023
(73) Patentinhaber: Stöcklin Logistik AG, 4242 Laufen (CH)
(72) Erfinder: BEGERT, Urs, 2563 Ipsach (CH)
(74) Vertreter: Söllner, Udo

(56) Entgegenhaltungen:
- EP-A1- 1 617 958
- EP-A1- 2 163 498
- EP-B1- 1 617 958
- US-A- 3 583 545

## Beschreibung

Die vorliegende Erfindung betrifft eine Vorrichtung zur Sequenzierung von Ladeeinheiten in einer vorbestimmten Reihenfolge, mit einer Sequenzierzone mit einer Mehrzahl von Bändern zur Aufnahme von zu sequenzierenden Ladeeinheiten und einer der Sequenzierzone vorgelagerten Zuführeinrichtung für Ladeeinheiten sowie einer der Sequenzierzone nachgelagerten Vereinzelungseinrichtung mit Aufnahmen für Ladeeinheiten, und einer die Ladeeinheiten auf die Bänder verteilenden Verteilungseinrichtung sowie einer die vereinzelten Ladeeinheiten in Richtung zu einer der Vorrichtung nachgelagerten Fördereinrichtung befördernden Umsetzeinrichtung. Die Erfindung betrifft darüber hinaus auch ein Verfahren der Sequenzierung von Ladeeinheiten in einer vorbestimmten Reihenfolge.

Bei den Ladeeinheiten kann es sich um Einheiten oder Gebinde handeln, die bei der Kommissionierung von Produkten für den Einzelhandel oder Filialbetrieben benötigt werden. Dabei wird aus einer Vielzahl von Ladeeinheiten oder Gebinden mit unterschiedlichen Produkten eine für den jeweiligen Betrieb benötigte Filialpalette zusammengestellt.

Diese Einheiten oder Ladeeinheiten werden auf einem Ladungsträger in der Form beispielsweise einer Palette zusammengestellt, wobei die Einheiten auf der Palette zu Produktstapeln zusammengestellt werden und zwar oftmals in der Form einer vorbestimmten Reihenfolge, die vom Filialbetrieb vorgegeben wird.

Ein Beispiel für solche Ladeeinheiten, die bei der Kommissionierung mit besonderer Sorgfalt behandelt werden müssen, sind stapelbare Stückgutgebinde, welche Obst- und Gemüseprodukte beinhalten.

Die Ladeeinheiten können daher als Einweggebinde in der Form von beispielsweise Kartons oder auch als Mehrweggebinde vorliegen, welche aus einem Kunststoffwerkstoff oder auch aus Kartonmaterial gebildet sind oder auch als Klappboxen, also Gebinden mit einklappbaren Seitenwänden.

Der Versand von Frischwaren erfolgt oft vom Großverteiler aus in der Form der genannten Gebinde, die auf Ladungsträger in der Form von Paletten oder Rollcontainern filialgerecht aufgestapelt werden müssen. Dabei spielt die vorstehend schon genannte Reihenfolge bei der Bildung von Stapeln eine Rolle, die bei einer manuellen Bildung der Ladestapel auf dem Ladungsträger vom Bedienungspersonal herbeigeführt wird und bei der automatisierten Beladung der Ladungsträger von einer Steuervorrichtung in der Form beispielsweise eines Leitrechners vorgegeben wird.

Die Ladeeinheiten müssen also für den Filialbetrieb in einer vorbestimmten Reihenfolge auf dem Ladungsträger gestapelt werden. Aus dem jeweiligen Lager, in welchem die Ladeeinheiten beispielsweise auf Paletten gestapelt sind, die vom Lieferanten mit jeweils immer gleichen Waren in oder auf Ladeeinheiten geliefert werden, werden die Ladeeinheiten depalettiert und auf Fördermitteln in Richtung zu der Vorrichtung zur Sequenzierung befördert.

Bei den Fördermitteln kann es sich um eine Zuführeinrichtung in der Form eines Zuführbands handeln, auf dem also die Ladeeinheiten in einer nicht für die Palettierung auf einer Palette oder einem Rollcontainer geeigneten Reihenfolge zur Vorrichtung zur Sequenzierung befördert werden.

Mittels der Vorrichtung zur Sequenzierung der Ladeeinheiten muss eine für die Palettierung der Ladeeinheiten auf einer Palette oder einem Rollcontainer geeigneten Reihenfolge der Ladeeinheiten herbeigeführt werden, d. h. die Ladeeinheiten müssen, nachdem diese die Vorrichtung zur Sequenzierung wieder verlassen haben, in der geeigneten Reihenfolge vorliegen, um beispielsweise einer der Vorrichtung nachgelagerten Fördereinrichtung zugeführt werden zu können. Die nachgelagerten Fördereinrichtung befördert die Ladeeinheiten dann in der geeigneten und vorbestimmten richtigen Reihenfolge beispielsweise zu einer automatisierten Palettiervorrichtung, welche die Ladeeinheiten dann in der vorbestimmten Reihenfolge auf den Paletten oder Rollcontainern in der gewünschten Stapelreihenfolge stapelt.

Die EP 1617958 A1 offenbart eine Vorrichtung zur Sequenzierung von Pflastersteinen in einer vorbestimmten Reihenfolge, mit einer Sequenzierzone mit einer Mehrzahl von Rollenförderern zur Aufnahme von zu sequenzierenden Pflastersteinen und einer der Sequenzierzone vorgelagerten Zuführeinrichtung für Pflastersteine sowie einer der Sequenzierzone nachgelagerten Vereinzelungseinrichtung mit Aufnahmen für Pflastersteine, und einer die Pflastersteine auf die Rollenförderern verteilenden Verteilungseinrichtung sowie einer die vereinzelten Pflastersteine in Richtung zu einer der Vorrichtung nachgelagerten Fördereinrichtung befördernden Umsetzeinrichtung. Die Verteilungseinrichtung und die Umsetzeinrichtung sind dabei als Quer förderer ausgebildet. Die Querförderer transportieren die Pflastersteinen quer zu den Rollenförderern.

Ebenso wird durch die EP 1617958 A1 ein entsprechendes Verfahren der Sequenzierung von Pflastersteinen in einer vorbestimmten Reihenfolge offenbart. Anhand der EP 2 306 379 A1 ist ein Verfahren zum Steuern von Materialströmen bekannt geworden, mit dem insbesondere bei der Fertigung von Fahrzeugen Materialien oder Bauteile zur richtigen Zeit und in der richtigen Menge im Produktionswerk bereitgestellt werden können.

Im Unterschied zu diesen bekannten Verfahren liegt der vorliegenden Erfindung die Aufgabe zugrunde, eine Vorrichtung zur Sequenzierung von Ladeeinheiten in einer vorbestimmten Reihenfolge bereitzustellen, mit der die Ladeeinheiten in der richtigen Reihenfolge für die spätere Palettierung auf Paletten oder Rollcontainern bereitgestellt werden können. Auch soll ein Verfahren zur Sequenzierung der Ladeeinheiten in der vorbestimmten Reihenfolge bereitgestellt werden.

Die Erfindung schafft zur Lösung dieser Aufgabe hinsichtlich der Vorrichtung eine Vorrichtung zur Sequenzierung mit den Merkmalen des Anspruchs 1. Vorteilhafte Ausgestaltungen der Vorrichtung sind in den weiteren Ansprüchen beschrieben. Darüber hinaus schafft die Erfindung hinsichtlich des Verfahrens ein Verfahren der Sequenzierung von Ladeeinheiten mit den Merkmalen des Anspruchs 9. Vorteilhafte Ausgestaltungen des Verfahrens sind in den weiteren Ansprüchen beschrieben. Nach der Erfindung ist eine Vorrichtung vorgesehen zur Sequenzierung von Ladeeinheiten in einer vorbestimmten Reihenfolge, mit einer Sequenzierzone mit einer Mehrzahl von Bändern zur Aufnahme von zu sequenzierenden Ladeeinheiten und einer der Sequenzierzone vorgelagerten Zuführeinrichtung für angelieferte Ladeeinheiten sowie einer der Sequenzierzone nachgelagerten Vereinzelungseinrichtung mit Aufnahmen für Ladeeinheiten, und einer die angelieferten Ladeeinheiten auf die Bänder verteilenden Verteilungseinrichtung sowie einer die vereinzelten Ladeeinheiten in Richtung zu einer der Vorrichtung nachgelagerten Fördereinrichtung befördernden Umsetzeinrichtung, wobei die Verteilungseinrichtung und/oder die Umsetzeinrichtung als Querschieber ausgebildet ist, welcher die Ladeeinheiten quer zu den Bändern oder Aufnahmen verschiebt.

Die erfindungsgemäße Vorrichtung weist eine Sequenzierzone auf, in der eine Mehrzahl von Bändern zur Aufnahme von zu sequenzierenden Ladeeinheiten vorgesehen sind. Die Bänder werden auch als Staubänder bezeichnet, da auf einem einzelnen Band von der Zuführeinrichtung in Richtung zur nachgelagerten Fördereinrichtung betrachtet mehrere Ladeeinheiten hintereinander angeordnet sein können, welche dann zu der nachgelagerten Fördereinrichtung befördert werden. Bei der der Sequenzierzone vorgelagerten Zuführeinrichtung kann es sich um ein Zuführband handeln, auf dem die von einer Vorrichtung zur Depalettierung der Ladeeinheiten von einer Palette oder dergleichen depalettierten Ladeeinheiten in Richtung zu der Vorrichtung zur Sequenzierung befördert werden. Die von der Zuführeinrichtung beförderten Ladeeinheiten können auf dieser in zufälliger Reihenfolge befördert werden, die Ladeeinheiten können also in einer nicht nach Größe oder Gewicht sortierten Reihenfolge auf der Zuführeinrichtung, also beispielsweise dem Zuführband vorliegen.

Mittels der erfindungsgemäßen Vorrichtung zur Sequenzierung der Ladeeinheiten wird dann die vorbestimmte Reihenfolge der Ladeeinheiten erzeugt, welche benötigt wird, damit diese dann beispielsweise mittels einer automatisierten Palettiervorrichtung auf eine Palette oder einen Rollcontainer gestapelt werden können und zwar so, wie dies vom Filialbetrieb gewünscht ist oder aufgrund der Art der Waren oder des Gewichts der Ladeeinheiten benötigt wird.

Die Vorrichtung zur Sequenzierung der Ladeeinheiten besitzt auch eine der Sequenzierzone nachgelagerte Vereinzelungseinrichtung für die Ladeeinheiten. Die Vereinzelungseinrichtung weist Aufnahmen für die Ladeeinheiten auf, bei denen es sich beispielsweise um Vereinzelungsbänder handeln kann, welche die Ladeeinheiten von den Bändern der Sequenzierzone übernimmt und zur Beförderung durch eine der Sequenzierzone nachgelagerte Umsetzeinrichtung zu dieser befördert oder auf dieser bereitstellt.

Die erfindungsgemäße Vorrichtung zur Sequenzierung der Ladeeinheiten besitzt auch eine die angelieferten Ladeeinheiten auf die Bänder der Sequenzierzone verteilende Verteilungseinrichtung sowie die vorstehend bereits genannte, die vereinzelten Ladeeinheiten in Richtung zu einer der Vorrichtung nachgelagerten Fördereinrichtung befördernde Umsetzeinrichtung.

Bei der nachgelagerten Fördereinrichtung kann es sich beispielsweise um die vorstehend bereits erwähnte automatisierte Palettiervorrichtung handeln, welche dann die Ladeeinheiten in der bestimmungsgemäßen Reihenfolge auf den Paletten oder Rollcontainern in Stapelform bereitstellt.

Die Erfindung sieht dabei vor, dass die Verteilungseinrichtung als Querschieber ausgebildet ist, welcher die Ladeeinheiten quer zu den Bändern der Sequenzierzone verschieben kann. Auch sieht die Erfindung vor, dass die Umsetzeinrichtung als Querschieber ausgebildet sein kann, welcher die Ladeeinheiten quer zu den Aufnahmen verschiebt. Die Umsetzeinrichtung kann also die Ladeeinheiten quer zu den Aufnahmen verschieben, also beispielsweise quer zu den vorstehend bereits genannten Vereinzelungsbändern, welche die Ladeeinheiten in der vorbestimmten Reihenfolge von den Bändern der Sequenzierzone übernimmt.

Der Querschieber weist den Vorteil auf, dass eine hohe Leistungsdichte aufweist, also eine große Zahl von Ladeeinheiten pro Zeiteinheit befördern kann und verglichen mit beispielsweise einem Hubtisch oder dergleichen wenig Platzbedarf für die Installation benötigt.

Es ist nach der Erfindung vorgesehen, dass der Querschieber mindestens zwei relativ zueinander verschwenkbare Schieberarme aufweist, welche an oberhalb und quer zu den Bändern oder Aufnahmen angeordneten Tragarmen vorgesehen und entlang der Tragarme verlagerbar angeordnet sind und an den Ladeeinheiten in Anlage bringbar sind.

Mit dieser Konfiguration wird erreicht, dass durch die mindestens zwei zueinander verschwenkbaren Schieberarme die Förderkapazität des Querschiebers verglichen mit einem Querschieber mit nur einem Schieberarm bei zwei Schieberarmen verdoppelt wird und somit eine wesentlich höhere Durchsatzleistung der erfindungsgemäßen Vorrichtung zur Sequenzierung der Ladeeinheiten erreicht wird. Auf diese Weise kann beispielsweise erreicht werden, dass die erfindungsgemäße Vorrichtung mindestens 800 Gebinde oder Ladeeinheiten pro Stunde verarbeiten kann, also mindestens 800 Ladeeinheiten pro Stunde in der vorbestimmten Reihenfolge bereitstellen kann, welche dann der nachgeschalteten Fördereinrichtung zugeführt werden können.

Eine solche hohe Durchsatzleistung ist insbesondere bei mit Obst- und Gemüseprodukten befüllten Ladeeinheiten von erheblichem Vorteil, da damit erreicht wird, dass diese rasch verderblichen Produkte rasch in der Form von gestapelten Ladeeinheiten auf den Filialpaletten oder Filialrollcontainern bereitgestellt werden können und somit schnell weitertransportiert werden können.

Dadurch, dass die mindestens zwei Schieberarme relativ zueinander verschwenkbar ausgebildet sind, wird erreicht, dass ein Schieberarm, welcher beispielsweise eine Ladeeinheit zu einer von der Eingangszone der Sequenzierzone beabstandeten Band verschoben hat und die Ladeeinheit auf dem Band abgelegt oder platziert hat, in Richtung zur Eingangszone oder dem Übergabebereich für die Ladeeinheiten vom Zuführband zur Sequenzierzone zurück verfahren werden kann, während der andere Schieberarm während dieser Rückfahrbewegung des verschwenkten Schieberarms eine Ladeeinheit in Richtung zu einem Band der Sequenzierzone verschiebt.

Dadurch, dass der zurückfahrende Schieberarm relativ zu dem anderen Schieberarm verschwenkt werden kann, also beispielsweise in einer Hochachsrichtung des Schieberarms betrachtet nach hinten in einem Winkel von beispielsweise 45 bis 90 Grad verschwenkt werden kann, kollidiert dieser verschwenkte Schieberarm während der Rückfahrbewegung nicht mit dem anderen Schieberarm, welcher gerade eine Ladeeinheit in Richtung zu einem Band der Sequenzierzone verschiebt oder verlagert.

Es wird also mit der erfindungsgemäßen Vorrichtung erreicht, dass ein Schieberarm in Richtung zur Eingangszone der Sequenzierzone zurück verfahren werden kann, an der eine nächste zu verschiebende oder zu verlagernde Ladeeinheit bereits bereitgestellt ist, während der andere Schieberarm gerade eine an der Eingangszone vorher übernommene Ladeeinheit in Richtung zu einem Band der Sequenzierzone verschiebt oder verlagert.

Die Schieberarme können dabei entlang von Tragarmen in der Längsrichtung der Tragarme verlagert werden, wobei die Tragarme oberhalb und quer zu den Bändern oder Aufnahmen angeordnet sind. Es ist dabei eine Konfiguration möglich, bei der an einem Tragarm mehr als ein Schieberarm verlagert werden kann und auch eine Konfiguration, bei der jedem Schieberarm ein eigenständiger Tragarm zugeordnet ist, bei zwei Schieberarmen also zwei Tragarme vorgesehen sind, entlang derer die Schieberarme verlagert werden können. Die Schieberarme sind also auch relativ zu den Tragarmen verschwenkbar und können beispielsweise mittels eines jeweiligen Drehgelenks am Tragarm angelenkt sein, sodass der Schieberarm am Drehgelenk relativ zu einer horizontalen Richtung des Tragarms verschwenkt werden kann.

Es ist dabei nach einer Weiterbildung der Erfindung vorgesehen, dass die vorstehend erwähnten Aufnahmen in der Form von Vereinzelungsbändern ausgebildet sind, welche die Ladeeinheiten in den Erfassungsbereich des Querschiebers befördern.

Die Vereinzelungsbänder übernehmen also die jeweilige Ladeeinheit vom jeweiligen Band der Sequenzierzone und befördern die Ladeeinheit bis in den Erfassungsbereich des Schieberarms des Querschiebers, der dann den Schieberarm oder beispielsweise einen horizontal ausgebildeten Ausleger des Schieberarms an einer Seitenfläche der Ladeeinheit zur Anlage bringt, der Ausleger an der Seitenfläche der Ladeeinheit gehalten wird, während der Schieberarm am Tragarm verlagert wird und diese Verlagerungsbewegung des Schieberarms am Tragarm dazu führt, dass die Ladeeinheit beispielsweise zu einer Fördereinrichtung befördert wird. Bei der Fördereinrichtung kann es sich um einen Förderband oder einen Schieber handeln, der die Ladeeinheit letztlich auf der Palette oder dem Rollcontainer ablegt oder die Ladeeinheit auf einer bereits auf der Palette oder dem Rollcontainer positionierten anderen Ladeeinheit ablegt.

Es ist nach einer Weiterbildung der Erfindung vorgesehen, dass die Zuführeinrichtung als Zuführband ausgebildet ist und zwischen dem Zuführband und einem dem Zuführband benachbarten Band der Sequenzierzone eine Anschlageinrichtung vorgesehen ist, an der auf das benachbarte Band beförderte Ladeeinheiten in Anlage bringbar sind derart, dass diese bei laufendem Band daran in Anlage angeordnet verbleiben und mit dem Querschieber oder dessen Schieberarm in lösbaren Eingriff bringbar sind. Nach einer Alternative ist es auch vorgesehen, dass die Ladeeinheiten an die Anschlageinrichtung herangeführt werden, dort in Anlage kommen und dann das Band, auf dem sich die Ladeeinheit angeordnet befindet, angehalten wird und die Ladeeinheit dann vom Querschieber beziehungsweise vom Schieberarm übernommen wird und auf ein vorbestimmtes Band der Sequenzierzone verlagert beziehungsweise verschoben wird.

Es ist nach einer Weiterbildung der Erfindung auch vorgesehen, dass am Endbereich jedes Bands der Sequenzierzone benachbart zu der Aufnahme eine Anschlageinrichtung vorgesehen ist, welche relativ zum Band verlagerbar ist derart, dass eine auf dem Band angeordnete Ladeeinheit bei verlagerter Anschlageinrichtung vom laufenden Band in Richtung zur Aufnahme förderbar ist.

Die von dem Querschieber auf das entsprechende Band der Sequenzierzone beförderte Ladeeinheit wird also durch die Transportbewegung oder Förderbewegung des Bands in Richtung zur Anschlageinrichtung befördert und kommt dort zur Anlage. Die Anschlageinrichtung hält also die Ladeeinheit auch dann vom Weitertransport durch das laufende Band zurück, bis die Anschlageinrichtung relativ zum Band verlagert wird, also beispielsweise aus der Horizontalebene des Bands in Richtung nach unten verlagert wird, sodass die Förderbewegung des Bands die Ladeeinheit auf die Aufnahme bewegt, beispielsweise also auf das Vereinzelungsband bewegt, von dem die Ladeeinheit übernommen wird und bis in den Erfassungsbereich des Querschiebers der Umsetzeinrichtung befördert wird. Vom Querschieber wird die Ladeeinheit dann zur nachgelagerten Fördereinrichtung in der Form beispielsweise der bereits erwähnten Palettiervorrichtung befördert und von dieser auf der Palette oder dem Rollcontainer abgelegt.

Es ist nach einer Weiterbildung der Erfindung vorgesehen, dass der Schieberarm relativ zum Tragarm verschwenkbar ausgebildet ist und mittels der Schwenkbewegung an der Ladeeinheit in Anlage bringbar ist und in der verschwenkten Stellung relativ zum anderen Schieberarm entlang des Tragarms verlagerbar ist. Damit wird erreicht, dass die beiden Schieberarme entlang des Tragarms oder entlang der Tragarme aneinander vorbei verlagert werden können und auf diese Weise mit der simultanen Bewegung der beiden Schieberarme die Förderrate der erfindungsgemäßen Vorrichtung erhöht werden kann, da erreicht ist, dass immer einer der beiden Schieberarme gerade eine Ladeeinheit relativ zu den Bändern der Sequenzierzone verlagert oder relativ zu den Aufnahmen oder Vereinzelungsbändern verlagert, während sich der andere Schieberarm in Richtung zur Einlaufzone der Sequenzierzone zurückbewegt oder sich in Richtung zu der Aufnahme oder dem Vereinzelungsband zurückbewegt, an der oder dem die nächste Ladeeinheit vom Schieberarm zu übernehmen ist.

Es ist nach einer Weiterbildung der Erfindung auch vorgesehen, dass die Fördergeschwindigkeit des jeweiligen Vereinzelungsbands beziehungsweise der jeweiligen Aufnahme größer ist als die Fördergeschwindigkeit des jeweiligen Bands der Sequenzierzone und die Anschlageinrichtung nach der Erfassung der Ladeeinheit durch das Vereinzelungsband beziehungsweise der Aufnahme relativ zum Band der Sequenzierzone in Anschlagstellung verlagert ist oder wird derart, dass eine vom Band in Richtung zur Anschlageinrichtung beförderte Ladeeinheit daran in Anlage kommt.

Die zur Freigabe der jeweiligen Ladeeinheit relativ zur Aufnahme oder zum Vereinzelungsband verlagerte, also beispielsweise abgesenkte Anschlageinrichtung wird nach der Erfassung der Ladeeinheit durch die Aufnahme oder das Vereinzelungsband sofort wieder in Anschlagstellung verlagert, also beispielsweise relativ zum Band der Sequenzierzone ausgefahren, sodass die auf dem Band der Sequenzierzone beförderte Ladeeinheit an der Anschlageinrichtung sofort wieder in Anlage kommt. Damit wird erreicht, dass eine bereits auf dem Band der Sequenzierzone befindliche Ladeeinheit, welche der soeben vom Band der Sequenzierzone auf das Vereinzelungsband übergebenen Ladeeinheit folgt, an der Anschlageinrichtung in Anlage kommt. Durch den Transport der soeben übergebenen Ladeeinheit durch das Vereinzelungsband entsteht zwischen der soeben übergebenen Ladeeinheit und der noch auf dem Band der Sequenzierzone befindlichen vormals benachbarten Ladeeinheit eine Lücke. Während der Zeit, zu der diese Lücke besteht, wird die Anschlageinrichtung wieder in Anschlagstellung bewegt und die Anschlageinrichtung befindet sich in der Anschlagstellung, noch bevor die nächste Ladeeinheit an dieser zur Anlage kommt.

Es ist nach einer Weiterbildung der Erfindung vorgesehen, dass die Bänder und die Aufnahmen oder Vereinzelungsbänder als Mattenketten ausgebildet sind und mit einem quer zur Förderrichtung der Bänder abgeschrägten Randbereich versehen sind. Dieser abgeschrägten Randbereich sorgt dafür, dass die vom Schieberarm quer zur Förderrichtung der Mattenketten beförderten Ladeeinheiten mit dem jeweiligen der Mattenkette zugeordneten Randbereich des Unterbodens der Ladeeinheit nicht mit der Mattenkette kollidieren, sondern vom Schieberarm auf die Förderoberfläche oder Förderflächen der Mattenketten ohne Kollisionsgefahr befördert werden können.

Die Erfindung schafft auch ein Verfahren der Sequenzierung von Ladeeinheiten in einer vorbestimmten Reihenfolge, mittels einer Sequenzierzone mit einer Mehrzahl von Bändern zur Aufnahme von zu sequenzierenden Ladeeinheiten und einer der Sequenzierzone vorgelagerten Zuführeinrichtung für angelieferte Ladeeinheiten sowie einer der Sequenzierzone nachgelagerten Vereinzelungseinrichtung mit Aufnahmen für Ladeeinheiten, und einer die angelieferten Ladeeinheiten auf die Bänder verteilenden Verteilungseinrichtung sowie einer die vereinzelten Ladeeinheiten in Richtung zu einer der Vorrichtung nachgelagerten Fördereinrichtung befördernden Umsetzeinrichtung, wobei nach dem Verfahren die Ladeeinheiten mittels eines Querschiebers relativ zu den Bändern der Sequenzierzone verlagert werden.

Damit wird erreicht, dass die mittels der Zuführeinrichtung bereitgestellten Ladeeinheiten von der Sequenzierzone übernommen werden können und zwar mittels eines Querschiebers, der am Eingangsbereich oder an der Eingangszone der Sequenzierzone vorgesehen ist und die Ladeeinheiten vom Querschieber relativ zu den Bändern der Sequenzierzone verlagert werden. Der Querschieber kann dabei die jeweilige Ladeeinheit zu einem vorbestimmten Band der Sequenzierzone verlagern, wobei das jeweilige Band beispielsweise von einer Steuereinrichtung ermittelt oder vorbestimmt wird und zwar auf Basis einer Reihenfolge, mit der die Ladeeinheiten dann beispielsweise auch in Abhängigkeit vom Belegungszustand der Bänder in der vorbestimmten Reihenfolge sequenziert oder sortiert werden, damit sie dann in der für die spätere Palettierung der Ladeeinheiten vorbestimmten Reihenfolge am Ausgang der Sequenzierzone bereitgestellt werden.

Es ist einer Weiterbildung des erfindungsgemäßen Verfahrens auch vorgesehen, dass die Ladeeinheiten mittels eines Querschiebers relativ zu den Aufnahmen der nachgelagerten Vereinzelungseinrichtung verlagert werden. Bei den Aufnahmen der nachgelagerten Vereinzelungseinrichtung kann es sich beispielsweise um Vereinzelungsbänder handeln, wobei jeweils ein Vereinzelungsband einem jeweiligen Band der Sequenzierzone zugeordnet ist und das Vereinzelungsband dann eine Ladeeinheit vom Band der Sequenzierzone übernimmt. Die auf dem Vereinzelungsband so übernommene Ladeeinheit wird dann mittels des Querschiebers verlagert und zwar in Richtung zu einer nachgelagerten Fördereinrichtung, bei der es sich beispielsweise um eine automatisierte Vorrichtung zur Palettierung der sequenzierten Ladeeinheiten handeln kann, die die Ladeeinheiten dann in der Form von Stapeln auf einer Palette oder einem Rollcontainer ablegen kann.

Es ist dabei nach dem erfindungsgemäßen Verfahren vorgesehen, dass der Querschieber zwei relativ zueinander verschwenkbare erste und zweite Schieberarme besitzt und die beiden Schieberarme an mindestens einem Tragarm quer zu der Förderrichtung der Bänder der Sequenzierzone verlagert werden, wobei einer der Tragarme eine Ladeeinheit in Richtung zum jeweiligen Band der Sequenzierzone befördert, während der andere Schieberarm in einer zum Tragarm verschwenkten Stellung in Richtung zu einem der Zuführeinrichtung benachbarten Band verfahren wird.

Damit wird erreicht, dass einer der Schieberarme eine jeweilige Ladeeinheit in Richtung zu dem vorbestimmten Band der Sequenzierzone verlagert und sich dabei der andere Schieberarm bereits wieder in Richtung zu der Übernahmeposition für Ladeeinheiten bewegt, wobei die Übernahmeposition im Bereich eines der Zuführeinrichtung benachbarten Bandes vorgesehen sein kann.

Die Erfindung wird im Folgenden anhand der Zeichnung näher erläutert. Diese zeigt in:
Fig. 1 eine perspektivische Darstellung einer Vorrichtung zur Sequenzierung von Ladeeinheiten nach einer Ausführungsform gemäß der vorliegenden Erfindung;
Fig. 2 eine vergrößerte Darstellung eines Ausschnitts des Übergabebereichs für Ladeeinheiten von der Zuführeinrichtung auf die Sequenzierzone;
Fig. 3 eine perspektivische Darstellung ähnlich derjenigen nach Fig. 1, bei der eine Ladeeinheit von der Zuführeinrichtung auf die Sequenzierzone bereits übergeben wurde;
Fig. 4 eine perspektivische Darstellung, welche zeigt, dass sich eine Ladeeinheit bereits auf einem ersten Band der Sequenzierzone befindet und sich eine zweite Ladeeinheit im Übergabebereich von der Zuführeinrichtung auf die Sequenzierzone befindet;
Fig. 5 eine perspektivische Darstellung, welche zeigt, dass die zweite Ladeeinheit vom Querschieber bereits auf ein zweites Band der Sequenzierzone verschoben wurde;
Fig. 6 eine perspektivische Darstellung, welche die erste Ladeeinheit bereits an einer Anschlageinrichtung angeordnet zeigt;
Fig. 7 eine perspektivische Darstellung, welche eine dritte Ladeeinheit bereits auf einem dritten Band der Sequenzierzone angeordnet zeigt;
Fig. 8 eine Darstellung ähnlich derjenigen nach Fig. 7, welche zeigt, dass die dritte Ladeeinheit in Richtung zur Anschlageinrichtung befördert wird;
Fig. 9 eine perspektivische Darstellung der erfindungsgemäßen Vorrichtung in einem nächsten Ablaufschritt der Sequenzierung;
Fig. 10 eine perspektivische Darstellung, welche die erfindungsgemäße Vorrichtung in einem nächsten Ablaufschritt der Sequenzierung zeigt;
Fig. 11 eine perspektivische Darstellung ähnlich derjenigen nach Fig. 10, welche die erfindungsgemäße Vorrichtung in einem nächsten Ablaufschritt der Sequenzierung zeigt;
Fig. 12 eine perspektivische Darstellung ähnlich derjenigen nach Fig. 11, welche die erfindungsgemäße Vorrichtung in einem nächsten Ablaufschritt der Sequenzierung zeigt;
Fig. 13 eine perspektivische Darstellung ähnlich derjenigen nach Fig. 12, welche die erfindungsgemäße Vorrichtung in einem nächsten Ablaufschritt der Sequenzierung zeigt;
Fig. 14 eine perspektivische Darstellung, welche die sequenzierten Ladeeinheiten an den Bändern der Sequenzierzone angeordnet zeigt, bevor sie vom zweiten Querschieber zur nachgelagerten Fördereinrichtung befördert werden;
Fig. 15 eine perspektivische Darstellung ähnlich derjenigen nach Fig. 14 in einem anderen Winkel der Ansicht;
Fig. 16 eine perspektivische Darstellung, welche zeigt, wie eine Ladeeinheit vom zweiten Querschieber in Richtung zur nachgelagerten Fördereinrichtung befördert wird;
Fig. 17 eine perspektivische Darstellung ähnlich derjenigen nach Fig. 16, welche die erfindungsgemäße Vorrichtung in einem nächsten Schritt des Ablaufs der Sequenzierung zeigt;
Fig. 18 eine perspektivische Darstellung ähnlich derjenigen nach Fig. 17, welche die erfindungsgemäße Vorrichtung in einem nächsten Schritt des Ablaufs der Sequenzierung zeigt;
Fig. 19 eine perspektivische Darstellung ähnlich derjenigen nach Fig. 18, welche die erfindungsgemäße Vorrichtung in einem nächsten Schritt des Ablaufs der Sequenzierung zeigt;
Fig. 20 eine perspektivische Darstellung ähnlich derjenigen nach Fig. 19, welche die erfindungsgemäße Vorrichtung in einem nächsten Schritt des Ablaufs der Sequenzierung zeigt;
Fig. 21 eine vergrößerte Darstellung eines Ausschnitts aus Fig. 20;

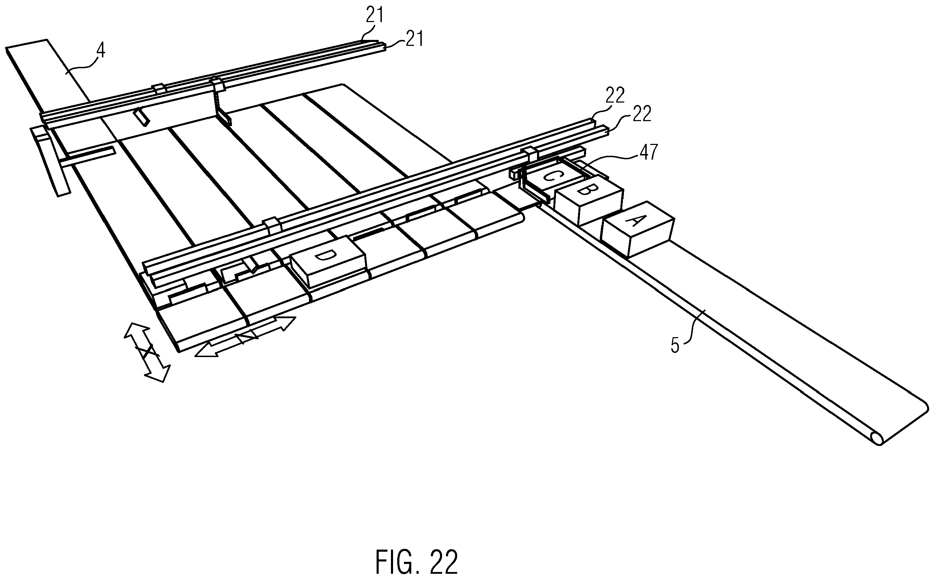

Fig. 22 eine perspektivische Darstellung ähnlich derjenigen nach Fig. 20, welche die erfindungsgemäße Vorrichtung in einem nächsten Schritt des Ablaufs der Sequenzierung zeigt; und
Fig. 23 eine perspektivische Darstellung ähnlich derjenigen nach Fig. 22, welche die erfindungsgemäße Vorrichtung in einem nächsten Schritt des Ablaufs der Sequenzierung zeigt.

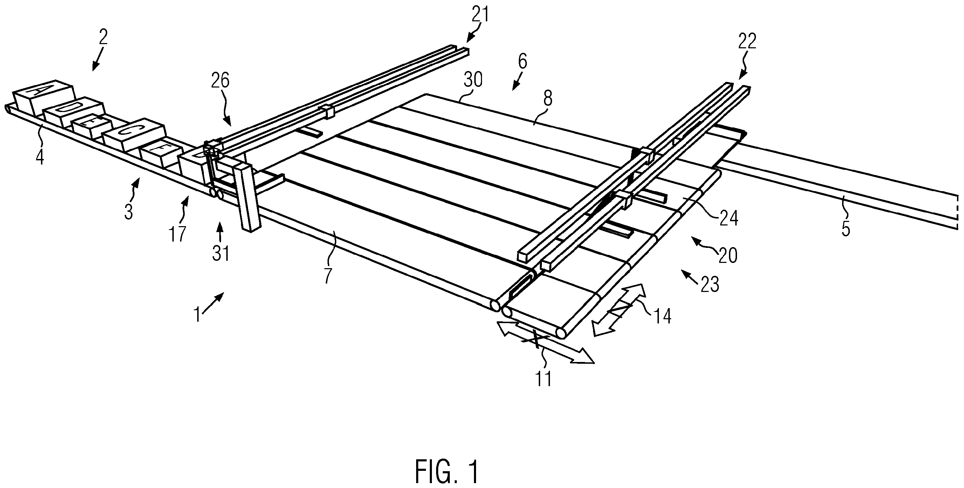

Fig. 1 der Zeichnung zeigt eine perspektivische Darstellung einer Vorrichtung 1 zur Sequenzierung von Ladeeinheiten 2, welche in Fig. 1 auf einer Zuführeinrichtung 3 in der Form eines Zuführbands 4 angeordnet sind.

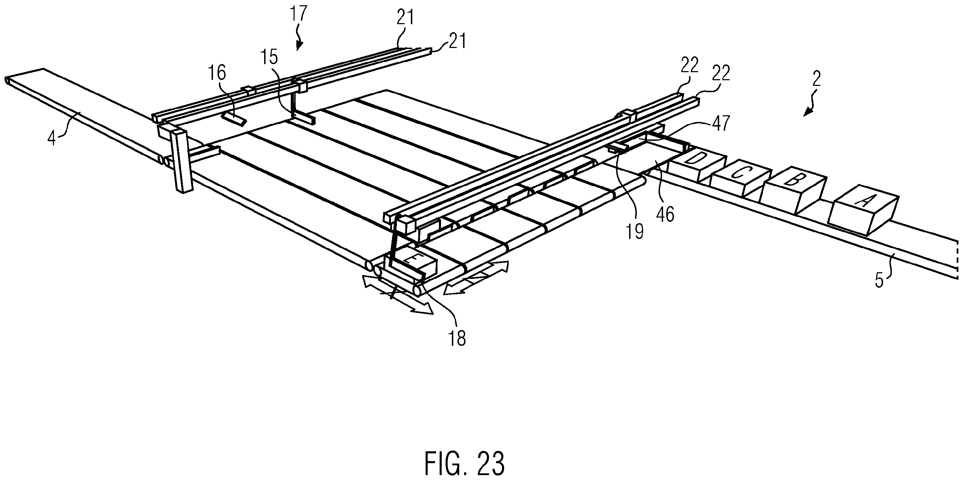

Wie es ohne weiteres ersichtlich ist, besitzen die Ladeeinheiten 2 unterschiedliche Größen beziehungsweise Abmessungen und sind der Verdeutlichung der Ladeeinheiten halber mit unterschiedlichen Buchstaben "A", "B", "C", "D", "E", "F" gekennzeichnet. Anhand von Fig. 1 ist auch ersichtlich, dass die Ladeeinheiten 2 nicht in alphabetischer Reihenfolge sortiert sind, aber zur späteren Weiterbearbeitung durch eine nicht näher dargestellte automatisierte Palettiervorrichtung in einer bestimmten hier der Erläuterung der Darstellung halber symbolisch gewählten, alphabetischen Reihenfolge sortiert vorliegen müssen, wie dies anhand von Fig. 23 der Zeichnung ersichtlich ist, welche die Ladeeinheiten 2 sortiert auf einer Fördereinrichtung 5 angeordnet zeigt, welche die Ladeeinheiten 2 beispielsweise zu der automatisierten Palettiervorrichtung befördern kann, die die Ladeeinheiten 2 dann in der Form von Stapeln auf nicht näher dargestellten Paletten oder Rollcontainern stapelt, mit denen die Ladeeinheiten 2 dann zu einer Filiale transportiert werden können.

Bei den Ladeeinheiten 2 kann es sich um Gebinde oder Behältnisse zur Aufnahme von Obst- und Gemüseprodukten handeln, es können auch andere Frischwaren, wie beispielsweise Fleisch oder dergleichen enthalten sein, genauso können Tiefkühlwaren oder andere Produkte enthalten sein.

Die Vorrichtung 1 zur Sequenzierung von Ladeeinheiten 2 in einer vorbestimmten Reihenfolge ist aufgrund der hohen Sequenzierleistung insbesondere zur Sequenzierung von Ladeeinheiten in der Form der vorstehend beschriebenen Gebinde geeignet, welche aufgrund der Verderblichkeit der genannten Waren in sehr kurzer Zeit bearbeitet werden müssen. Die erfindungsgemäße Vorrichtung 1 ist beispielsweise dazu geeignet, mindestens 800 Gebinde pro Stunde zu verarbeiten.

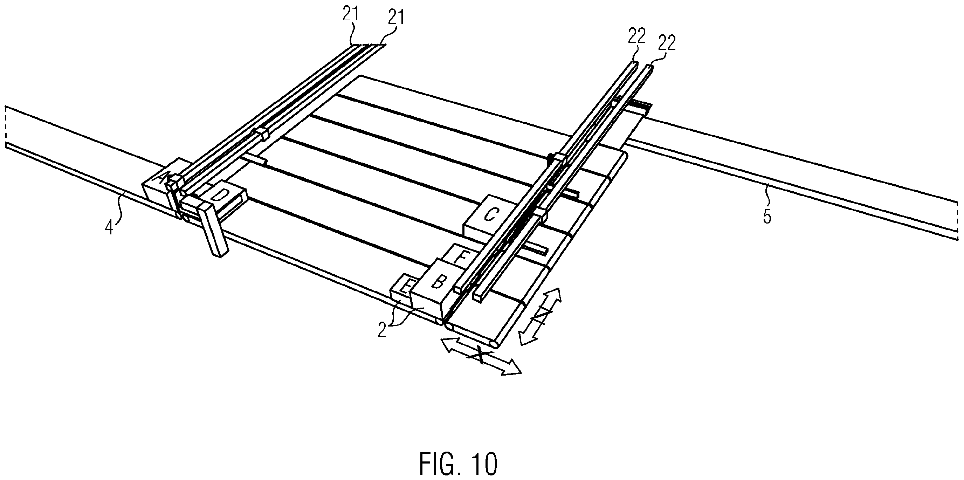

Die erfindungsgemäße Vorrichtung weist auch eine Sequenzierzone 6 auf, welche bei der dargestellten Ausführungsform der Vorrichtung 1 sechs Bänder 7 aufweist, welche parallel zueinander angeordnet sind. Die Bänder 7 können auch als Staubänder bezeichnet werden, da sich auf den Bändern 7 auch mehr als eine Ladeeinheit 2 angeordnet befinden kann, wie dies beispielsweise anhand von Fig. 10 der Zeichnung ersichtlich ist, welche das erste Band 7 mit zwei daran angeordneten Ladeeinheiten 2 zeigt.

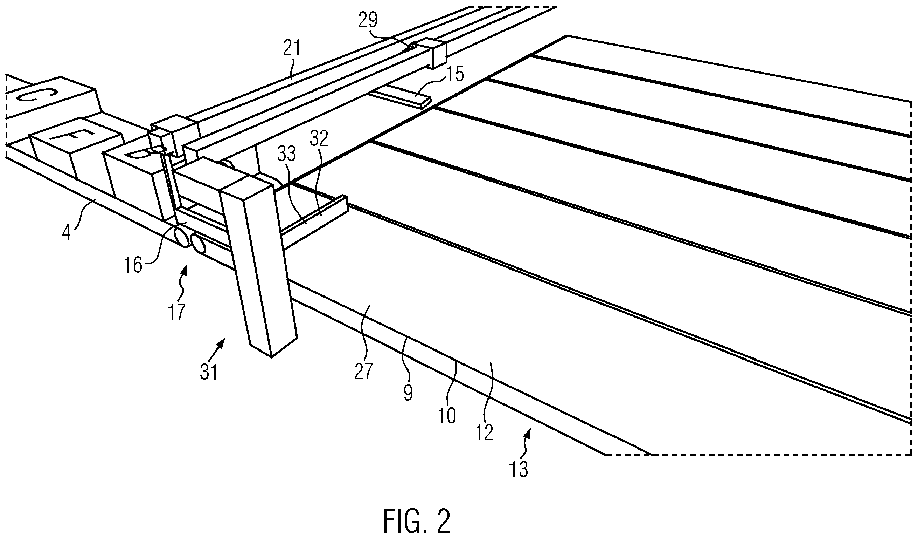

Die Bänder 7 können in der Form von Mattenbändern 8 ausgebildet sein, welche beispielsweise eine Dicke oder Stärke von 4 bis 5 Millimeter besitzen können und zumindest am Randbereich 9 (siehe Fig. 2) mit abgerundeten Kanten 10 versehen sind.

Fig. 1 der Zeichnung zeigt mit dem mit X bezeichneten Doppelpfeil 11 die Orientierung, mit der sich der Oberzuggurt 12 (siehe Fig. 2) des Mattenbands 8 bewegt und auch die Orientierung, mit der sich der Unterzuggurt 13 (siehe Fig. 2) des Mattenbands 8 bewegt.

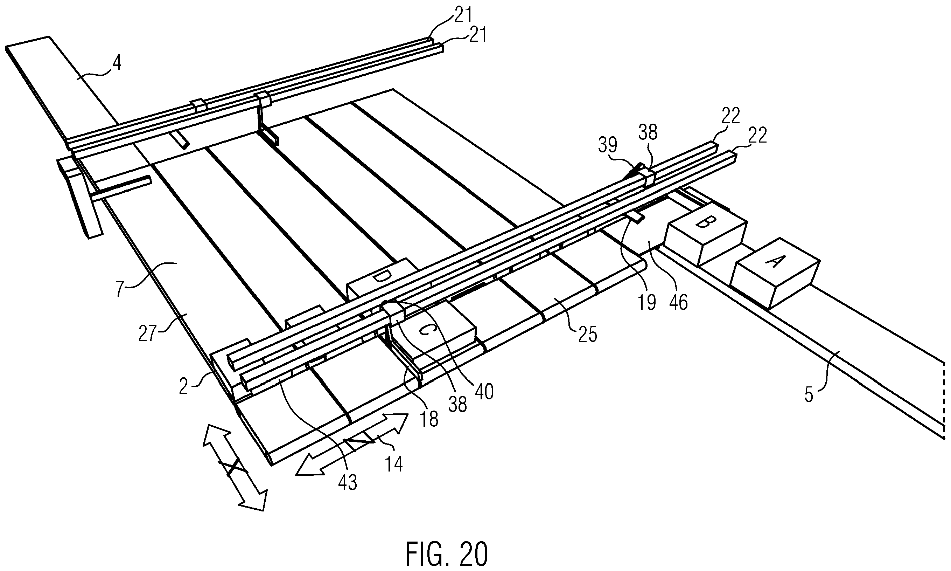

Fig. 1 der Zeichnung zeigt mit dem mit Z bezeichneten Doppelpfeil 14 die Orientierung, mit der sich der erste Schieberarm 15 (siehe Fig. 2) und der zweite Schieberarm 16 (siehe Fig. 2) des ersten Querschiebers 17 und auch der dritte Schieberarm 18 (siehe Fig. 20) und der vierte Schieberarm 19 (siehe Fig. 20) des zweiten Querschiebers 20 (siehe Fig. 1) bewegen können.

Wie es ohne weiteres anhand von beispielsweise Fig. 23 der Zeichnung ersichtlich ist, sind die Schieberarme 15, 16 des ersten Querschiebers 17 an zwei ersten Tragarmen 21 entlang der Längsrichtung der Tragarme 21, welche der mit dem Doppelpfeil 14 erläuterten Richtung entspricht, verschiebbar.

In ähnlicher Weise sind der dritte Schieberarm 18 und der vierte Schieberarm 19 an zwei zweiten Tragarmen 22 in deren Längsrichtung verschiebbar, wie dies beispielsweise anhand von Fig. 23 der Zeichnung ersichtlich ist.

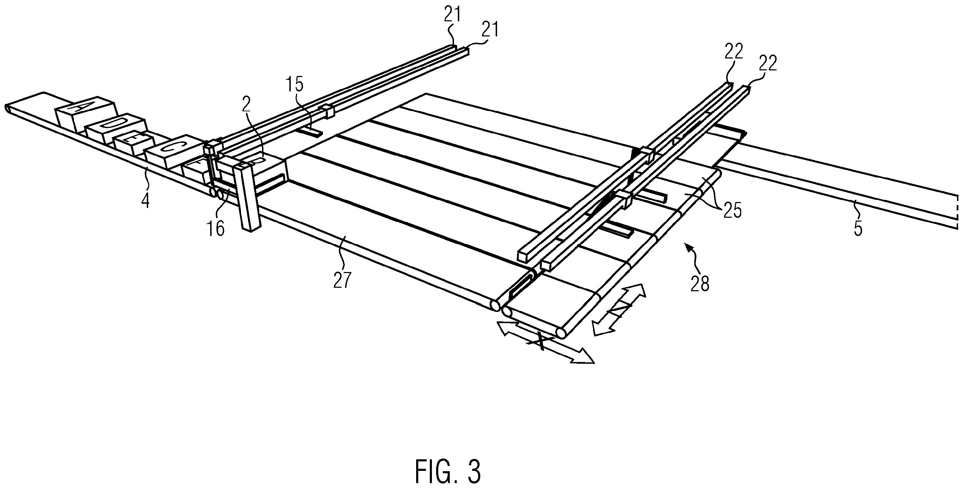

Die Vorrichtung 1 besitzt auch eine der Sequenzierzone 6 nachgelagerte Vereinzelungseinrichtung 23 mit Aufnahmen 24 zur Aufnahme der Ladeeinheiten 2, wobei die Aufnahmen 24 bei der dargestellten Ausführungsform der Vorrichtung 1 als Vereinzelungsbänder 25 ausgebildet sind, wie dies beispielsweise anhand von Fig. 3 der Zeichnung ersichtlich ist.

Die Vorrichtung 1 weist auch eine die angelieferten Ladeeinheiten 2 auf die Bänder 7 verteilende Verteilungseinrichtung 26 auf, welche bei der dargestellten Ausführungsform der Vorrichtung 1 vom ersten Querschieber 17 gebildet wird und besitzt auch eine die Ladeeinheiten 2 in Richtung zu einer der Vorrichtung 1 nachgelagerten Fördereinrichtung 5 befördernde Umsetzeinrichtung 28 (siehe Fig. 3), welche bei der dargestellten Ausführungsform der Vorrichtung 1 vom zweiten Querschieber 20 gebildet wird.

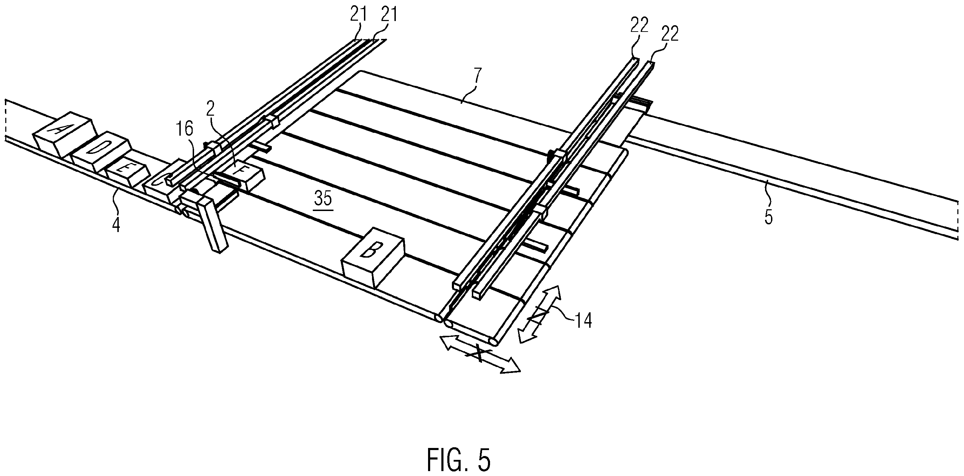

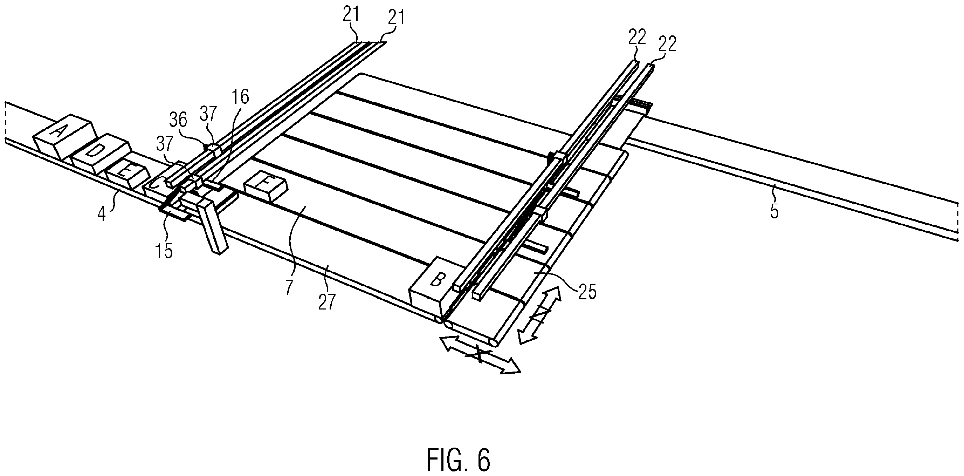

Der erste Querschieber 17 weist zwei relativ zueinander verschwenkbar ausgebildete Schieberarme 15, 16 auf, wie dies anhand von Fig. 2 der Zeichnung ersichtlich ist. Fig. 2 der Zeichnung zeigt den zweiten Schieberarm 16 in einer vertikalen Stellung am Tragarm 21 angeordnet und damit in einer Stellung, in welcher der Schieberarm 16 eine Ladeeinheit 2, welche beispielsweise anhand von Fig. 5 der Zeichnung ersichtlich ist und dort mit dem Buchstaben "F" bezeichnet ist, quer zu den Bändern 7, also in Richtung der Orientierung des Doppelpfeils 14 verschieben kann und zwar beispielsweise auf das dem ersten Band 27 (siehe Fig. 6) benachbarten Band 7, von dem dann die Ladeeinheit 2 in Richtung zu dem Vereinzelungsband 25 befördert wird, welches dem Band 7 mit der Ladeeinheit "F" darauf zugeordnet ist, wie dies beispielsweise anhand von Fig. 6 der Zeichnung ersichtlich ist.

Die Verteilungseinrichtung 26 ist nach der vorliegenden Ausführungsform der Erfindung also als erster Querschieber 17 ausgebildet und die Umsetzeinrichtung 28 ist als zweiter Querschieber 20 ausgebildet. Beide Querschieber 17, 20 besitzen jeweils zwei Schieberarme 15, 16 beziehungsweise 18, 19, welche jeweils verschwenkbar zueinander ausgebildet sind und quer zu den Bändern 7 oder Aufnahmen 24 verlagerbar angeordnet sind. Der erste Schieberarm 15 und der zweite Schieberarm 16 sind dabei an den ersten Tragarmen 21 entlang deren Längsrichtung verlagerbar oder verschiebbar angeordnet und der Schieberarm 18 sowie der Schieberarm 19 sind an den zweiten Tragarmen 22 entlang deren Längsrichtung verlagerbar oder verschiebbar angeordnet, wie dies anhand aller Darstellungen der Zeichnung ersichtlich ist.

Wie es darüber hinaus beispielsweise anhand von Fig. 1 der Zeichnung ersichtlich ist, sind die ersten Tragarme 21 oberhalb der Bänder 7 der Sequenzierzone 6 angeordnet und erstrecken sich in Richtung der Orientierung des Doppelpfeils 14, verlaufen also quer zu den Bändern 7, deren Orientierung sich anhand des Doppelpfeils 11 der Fig. 1 der Zeichnung ergibt.

Die zweiten Tragarme 22 sind oberhalb der Aufnahmen 24 angeordnet und verlaufen quer zu den Aufnahmen 24, wie sich dies beispielsweise ebenfalls anhand von Fig. 1 der Zeichnung, aber auch anhand aller anderen Figuren der Zeichnung ergibt.

Wie es vorstehend bereits erwähnt wurde, sind bei der dargestellten Ausführungsform der erfindungsgemäßen Vorrichtung 1 die Aufnahmen 24 als Vereinzelungsbänder 25 ausgebildet.

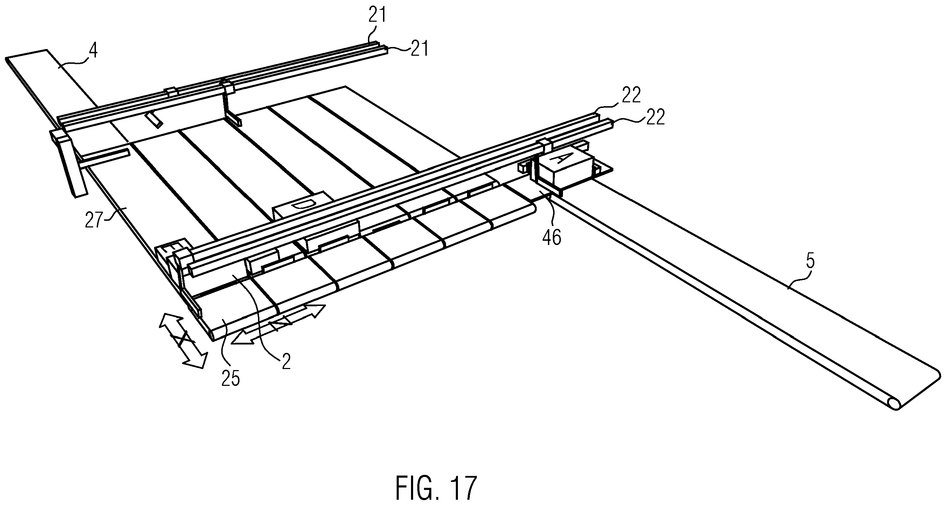

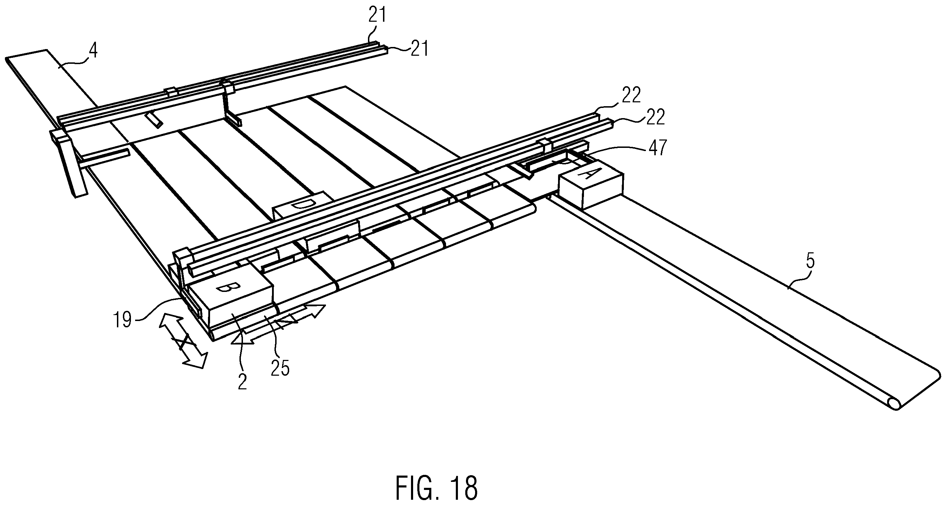

Fig. 17 und Fig. 18 der Zeichnung zeigen, dass das dem ersten Band 27 der Sequenzierzone 6 zugeordnete Vereinzelungsband 25 die in Fig. 17 noch auf dem Band 27 wartende Ladeeinheit 2 in Richtung zu dem dritten Schieberarm 18 transportiert, wobei Fig. 18 der Zeichnung zeigt, dass die mit dem Buchstaben "B" bezeichnete Ladeeinheit 2 in den Erfassungsbereich des Schieberarms 18 des Querschiebers 20 befördert wurde und von diesem dann in Richtung zur Fördereinrichtung 5 weiter befördert werden kann.

Fig. 2 der Zeichnung zeigt den ersten Schieberarm 15 in einer relativ zum Tragarm 21 verschwenkten Stellung und zwar entgegen der Förderrichtung des Schieberarms 15 in Richtung nach hinten verschwenkt. In der so an einem Drehgelenk oder Schwenkgelenk 29 verschwenkten Stellung des Schieberarms 15 kann der Schieberarm 16 eine Ladeeinheit 2 in Förderrichtung des Doppelpfeils 14, also quer zur Längsrichtung der Staubänder 7 verschieben, also unterhalb des in Richtung nach hinten verschwenkten Schieberarms 15 hindurchschieben, beispielsweise bis zu einem Band 30, welches in Richtung des Doppelpfeils 14 am weitesten von der Zuführeinrichtung 3 beziehungsweise dem Zuführband 4 beabstandet ist.

Während einer solchen Verlagerungsbewegung der Ladeeinheit 2 beispielsweise auf das Band 30 durch den zweiten Schieberarm 16 kann sich der erste Schieberarm 15 bereits wieder in Richtung zum Übergabebereich 31 für Ladeeinheiten 2 auf das erste Band 27 (siehe Fig. 1) zurück bewegen

Im Bereich des Übergabebereichs 31 ist zwischen dem Zuführband 4 und dem ersten Band 27, also benachbart zum Band 27 der Sequenzierzone 6 eine Anschlageinrichtung 32 in der Form eines Stoppers 33 angeordnet, an dem eine vom Zuführband 4 auf das erste Band 27 übergebene Ladeeinheit 2 in Anlage gebracht wird, wie dies beispielsweise anhand von Fig. 3 der Zeichnung ersichtlich ist.

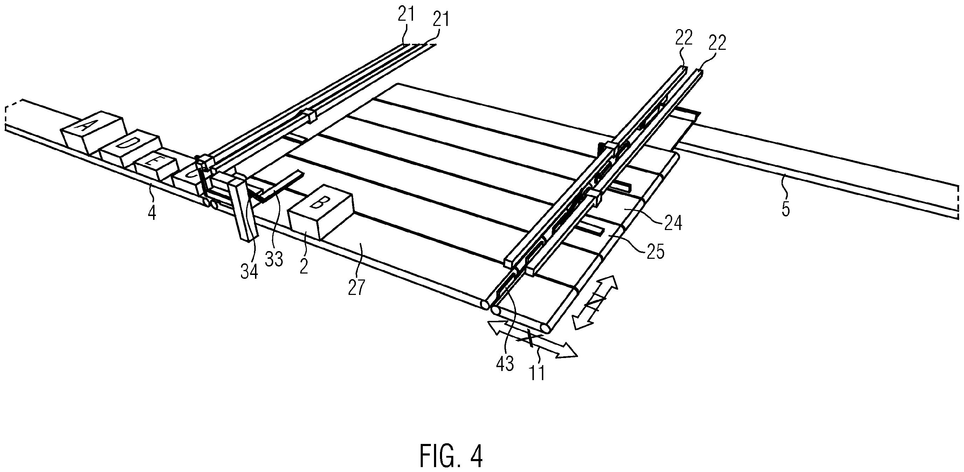

Fig. 4 der Zeichnung zeigt, dass der Stopper 33 an einem Drehgelenk 34 in Richtung nach oben verschwenkt worden ist, sodass das Band 27 die Ladeeinheit 2 in Richtung der Orientierung des Doppelpfeils 11 befördern kann, also in Richtung der Aufnahmen 24 oder der Vereinzelungsbänder 25.

Fig. 5 der Zeichnung zeigt, dass die mit dem Buchstaben "F" bezeichnete Ladeeinheit 2 vom zweiten Schieberarm 16 in Richtung zu dem zweiten Band 35 verschoben wird, von dem es dann, wie dies anhand der Fig. 6 der Zeichnung ersichtlich wie ist, in Richtung zum Vereinzelungsband 25 befördert wird.

Auch der zweite Schieberarm 16 kann, wie dies anhand von Fig. 6 der Zeichnung ersichtlich ist, an einem Drehgelenk 36 relativ zum Tragarm 21 und auch relativ zum ersten Schieberarm 15 verschwenkt werden. Der Schieberarm 15 besitzt ein Führungselement 37, mit dem er am Tragarm 21 geführt ist, auch der Schieberarm 16 weist ein solches Führungselement auf, um am Tragarm 21 geführt zu werden.

Wie es beispielsweise anhand von Fig. 20 der Zeichnung ersichtlich ist, besitzt auch der dritte Schieberarm 18 ein Führungselement 38, mit dem er am Tragarm 22 geführt ist und auch der vierte Schieberarm 19 besitzt ein Führungselement 38, mit dem dieser am Tragarm 22 geführt ist.

Der Schieberarm 19 ist an einem Drehgelenk 39 relativ zum Tragarm 22 und auch relativ zum Schieberarm 18 verschwenkbar angeordnet und der Schieberarm 18 ist an einem Drehgelenk 40 relativ zum Schieberarm 19 und relativ zum Tragarm 22 verschwenkbar angeordnet.

Die beiden Schieberarme 18 und 19 können aufgrund ihrer jeweils gelenkigen oder schwenkbaren Anordnung relativ zum Tragarm 22 und auch relativ zueinander aneinander vorbei bewegt werden, ohne dass es zur Kollision der Schieberarme oder eines Schieberarms mit einer darunter in Richtung der Orientierung des Doppelpfeils 14 erfolgenden Verlagerungsbewegung der Ladeeinheit 2 in Richtung zur Fördereinrichtung 5 kommt.

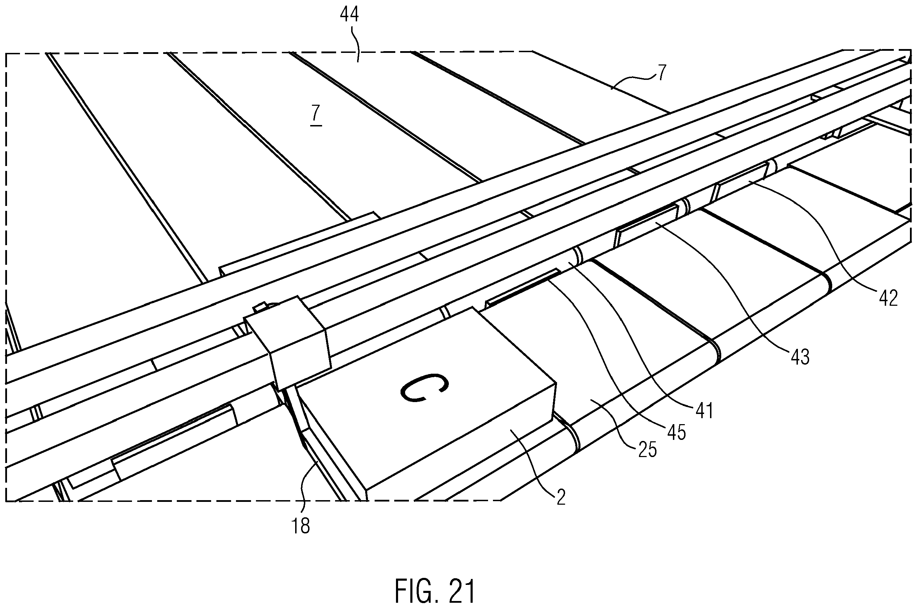

Wie es sich beispielsweise anhand von Fig. 21 der Zeichnung ergibt, ist am Endbereich 41 jedes Bands 7 eine Anschlageinrichtung 42 in der Form eines Stoppers 43 angeordnet, an dem die jeweilige Ladeeinheit 2 bei laufendem Band 7 in Anlage kommt, wie dies beispielsweise anhand von Fig. 20 der Zeichnung ersichtlich ist, welche die Ladeeinheit 2 an dem ersten Band 27 am Stopper 43 in Anlage angeordnet befindet. Wenn die Ladeeinheit 2 vom Band 7 auf die Aufnahme 24 beziehungsweise das Vereinzelungsband 25 übergeben werden soll, wird die Anschlageinrichtung 42 relativ zur Oberseite 44 des Bands 7 in Richtung nach unten verlagert, wie dies beispielsweise anhand des in Richtung nach unten verlagerten Stoppers 45 nach Fig. 21 der Zeichnung ersichtlich ist und die umlaufende Förderbewegung des Bands 7 befördert die jeweilige Ladeeinheit in den Erfassungsbereich des Vereinzelungsband 25, sodass die Ladeeinheit 2, wie dies beispielsweise anhand der mit dem Buchstaben "C" bezeichneten Ladeeinheit nach Fig. 21 der Zeichnung ersichtlich ist, kann dann vom jeweiligen Schieberarm - in Fig. 21 der Zeichnung beispielsweise der Schieberarm 18 - übernommen und in Richtung zu einer Schiebeplatte 46 befördert werden, die beispielsweise anhand von Fig. 23 der Zeichnung ersichtlich ist. Im Bereich der Schiebeplatte 46 befindet sich ein Schieber 47 angeordnet, der die Gebinde oder Ladeeinheiten 2 dann auf die Fördereinrichtung 5 befördert.

Die Schieberarme sind jeweils relativ zum Tragarm verschwenkbar ausgebildet und können mittels der Schwenkbewegung an der Ladeeinheit 2, beispielsweise einer Seitenfläche der Ladeeinheit 2 in Anlage gebracht werden und die Schieberarme können dann in ihrer Anlagestellung an der Ladeeinheit relativ zum Tragarm axial verlagert werden, was dazu führt, dass die Ladeeinheiten relativ zum jeweiligen Band 7 beziehungsweise relativ zum jeweiligen Vereinzelungsband 25 verlagert werden können.

Die Fördergeschwindigkeit des jeweiligen Vereinzelungsband 24 ist größer als die Fördergeschwindigkeit des dem Vereinzelungsband 24 zugeordneten Staubands 7 der Sequenzierzone 6, sodass die Anschlageinrichtung 45 rasch wieder relativ zur Oberseite 44 des jeweiligen Staubands 7 ausgefahren werden kann und die nächste Ladeeinheit 2 daran wieder in Anlage gebracht werden kann, noch bevor diese Ladeeinheit vom Vereinzelungsband 25 erfasst wird.

Fig. 1 der Zeichnung zeigt eine Anordnung, bei der sich die Ladeeinheiten 2 in noch nicht sequenzierter Reihenfolge auf dem Zuführband 4 angeordnet befinden, Fig. 2 der Zeichnung zeigt eine vergrößerte Darstellung des Übergabebereichs 31 für die Ladeeinheiten 2 vom Zuführband 4 auf das erste Band 27, welches sowohl als Übergabeband als auch als Stauband wirkt.

Wie es anhand von Fig. 3 der Zeichnung ersichtlich ist, ist dort bereits eine erste Ladeeinheit 2 von dem Zuführband 4 auf die Sequenzierzone 6 übergeben worden, die Ladeeinheit 2 befindet sich also im Übergabebereich 31 angeordnet und liegt an der Anschlageinrichtung 32 an.

Fig. 4 der Zeichnung zeigt eine perspektivische Darstellung, mit der ersichtlich ist, dass sich die Anschlageinrichtung 32 verschwenkt hat und den Weg der Ladeeinheit "B" zur Weiterbeförderung auf dem ersten Band 27 beziehungsweise dem Staubands 7 in Richtung zur Anschlageinrichtung 43 freigegeben hat.

Fig. 5 der Zeichnung zeigt, dass eine zweite Ladeeinheit "F" vom zweiten Schieberarm 16 des ersten Querschiebers 17 bereits auf das zweite Band 35 beziehungsweise Staubands 7 der zweiten Bahn mit dem zweiten Band 35 übergeben wurde.

Fig. 6 der Zeichnung zeigt, dass die Ladeeinheit "B" bereits an der Anschlageinrichtung 43 angeordnet ist und von dieser zurückgehalten wird, auch wenn das erste Band 27 weiter eine Vorschubbewegung ausführt.

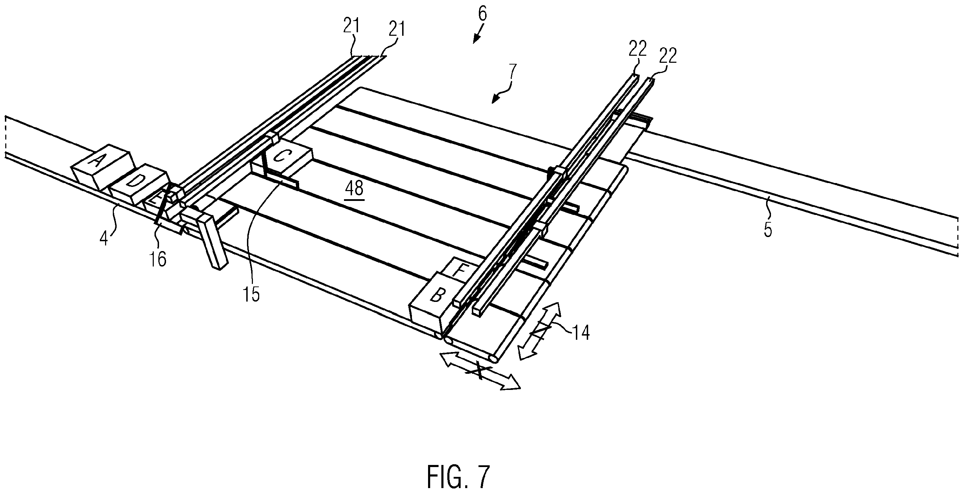

Fig. 7 der Zeichnung zeigt dass eine Ladeeinheit "C" vom ersten Schieberarm 15 bereits auf das dritte Band 48 der Sequenzierzone 6 verlagert wurde und sich der zweite Schieberarm 16 in der relativ zum Tragarm 21 verschwenkten Stellung befindet, in welcher die Ladeeinheit "C" auch unterhalb des zweiten Schieberarms 16 in Richtung des Doppelpfeils 14, also quer zu den Staubbändern 7 verlagert werden kann.

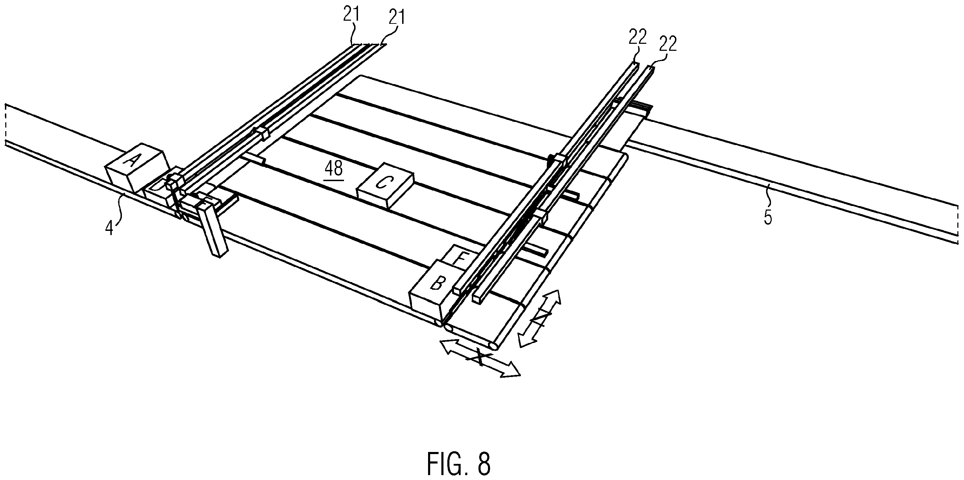

Fig. 8 der Zeichnung zeigt eine Darstellung ähnlich derjenigen nach Fig. 7, welche zeigt, dass die dritte Ladeeinheit "C" auf dem dritten Band bereits in Richtung der Anschlageinrichtung 42 verlagert wird.

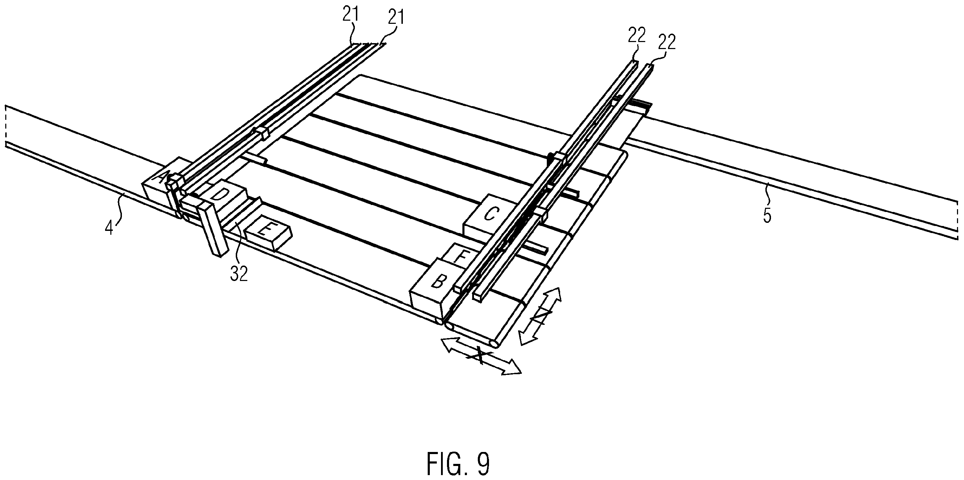

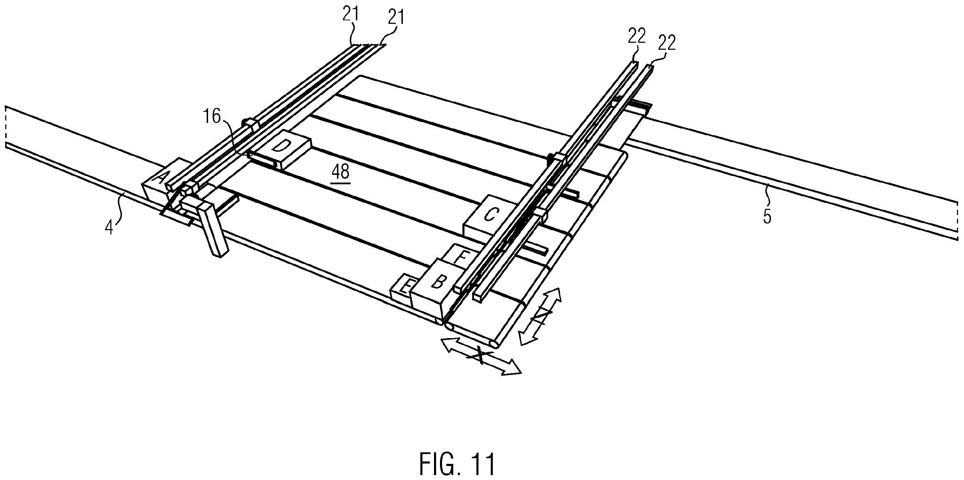

Fig. 9 der Zeichnung zeigt, dass die Ladeeinheit "C" bereits an der Anschlageinrichtung anliegt und die Ladeeinheit "E" von der Anschlageinrichtung 32 zum Weitertransport auf dem ersten Band 27 bereits freigegeben wurde und sich die Ladeeinheit "D" kurz vor der Anschlageinrichtung 32 angeordnet befindet, um dort, wie dies anhand von Fig. 10 der Zeichnung ersichtlich ist, in Anlage zu kommen und dann von dort, wie dies anhand von Fig. 11 der Zeichnung ersichtlich ist, vom zweiten Schieberarm 16 übernommen zu werden und bis auf das dritte Band 48 verschoben zu werden.

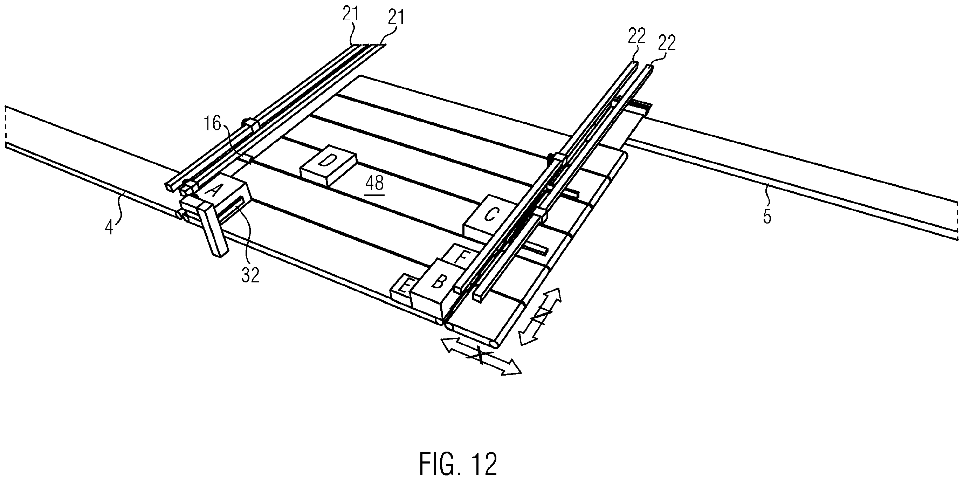

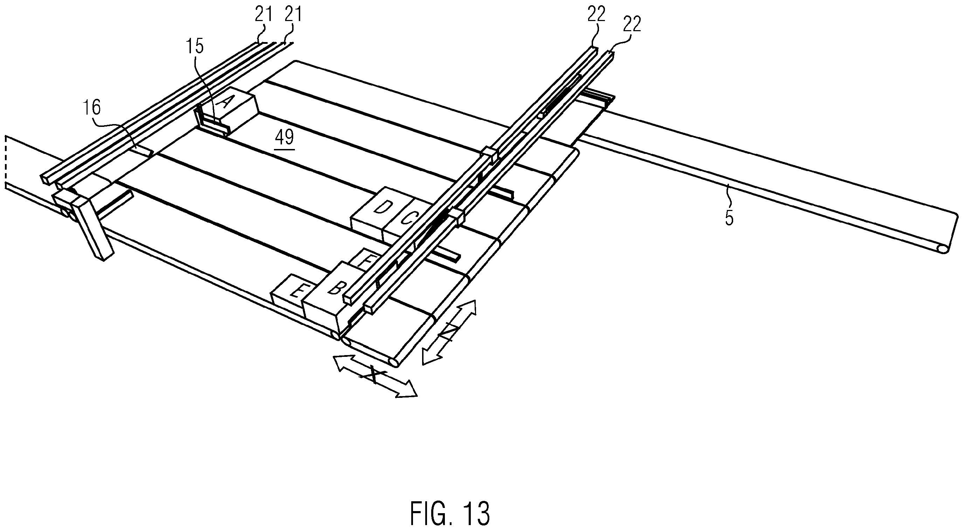

Das dritte Band 48 übernimmt dann die Ladeeinheit "D" und befördert diese in Richtung zur Anschlageinrichtung 42 und der zweite Schieberarm 16 ist relativ zum Tragarm 21 in Richtung nach hinten verschwenkt worden, sodass die in Fig. 12 der Zeichnung an der Anschlageinrichtung 32 anliegende Ladeeinheit "A" vom ersten Schieberarm 15, wie dies anhand von Fig. 13 der Zeichnung ersichtlich ist, in Richtung zum vierten Band 49 verschoben zu werden.

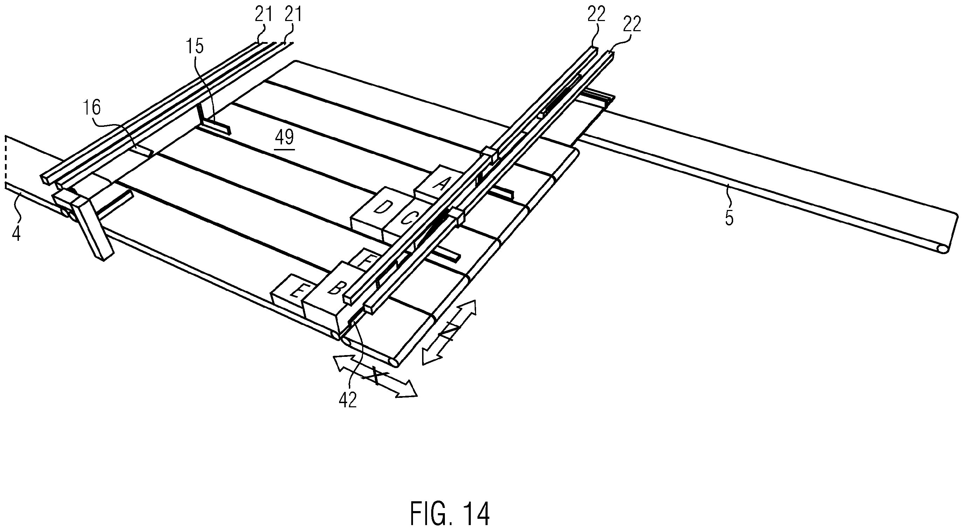

Fig. 14 der Zeichnung zeigt, dass das vierte Band 49 die Ladeeinheit A bereits bis an die Anschlageinrichtung 42 befördert hat, an der sie zur Übernahme durch das Vereinzelungsband 25 bereitsteht.

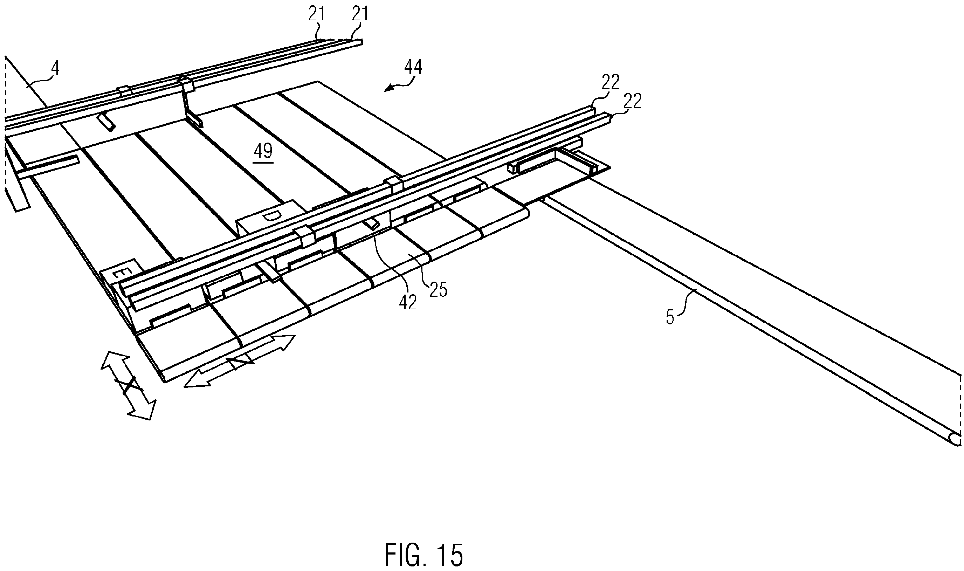

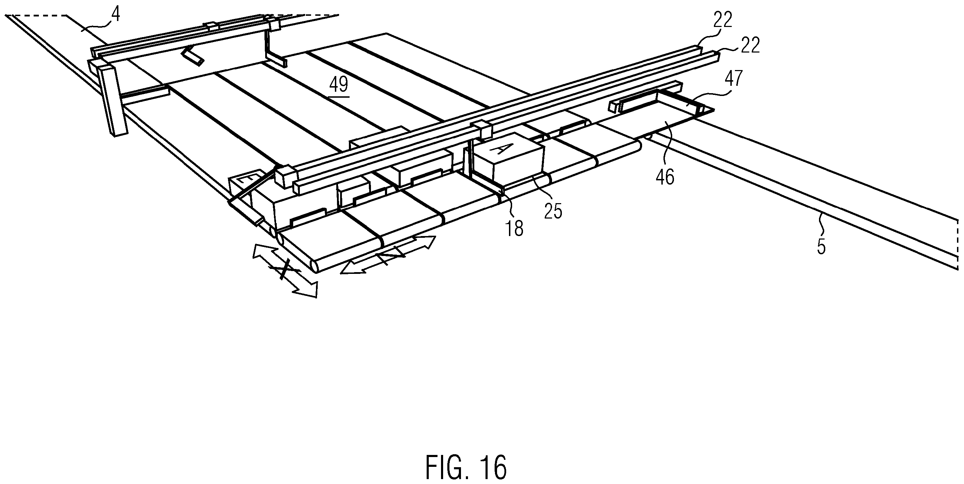

Fig. 15 der Zeichnung zeigt, dass die Anschlageinrichtung 42 relativ zur Oberseite 44 des Staubands 49 abgesenkt worden ist, sodass die Förderbewegung des Staubands 49 die Ladeeinheit "A" auf das Vereinzelungsband 25 übergibt, wie dies anhand von Fig. 16 der Zeichnung ersichtlich ist. Die Fig. 14 bis Fig. 16 zeigen auch, dass die Ladeeinheiten "B", "C", "D", "E" und "F" noch an den Anschlageinrichtungen 42 anlegen und von diesen noch nicht freigegeben wurden. Mit der Freigabe der Anschlageinrichtung 42, welche dem vierten Band 49 zugeordnet ist, wurde die Ladeeinheit "A" auf das Vereinzelungsband 25 übergeben und kann von diesem in den Erfassungsbereich des dritten Schieberarms 18 verlagert werden, welcher die Ladeeinheit "A" dann mittels einer Verlagerungsbewegung am Tragarm 22 auf die Schiebeplatte 46 befördern kann, wie dies anhand der Fig. 17 der Zeichnung ersichtlich ist.

Von der Schiebeplatte 46 kann die Ladeeinheit "A" dann mittels des Schiebers 47 auf die Fördereinrichtung 5 befördert werden, wie dies anhand von Fig. 18 der Zeichnung ersichtlich ist. Fig. 18 zeigt auch, dass die nächste Ladeeinheit "B" auf das Vereinzelungsband 25 befördert wurde und vom Schieberarm 19 übernommen werden kann, um auf die Schiebeplatte 46 befördert zu werden, auf der Fördereinrichtung 5 befindet sich dann, wie dies anhand von Fig. 20 der Zeichnung ersichtlich ist, die Ladeeinheit "A" gefolgt von der Ladeeinheit "B", die beiden Ladeeinheiten sind also in der vorbestimmten Reihenfolge angeordnet.

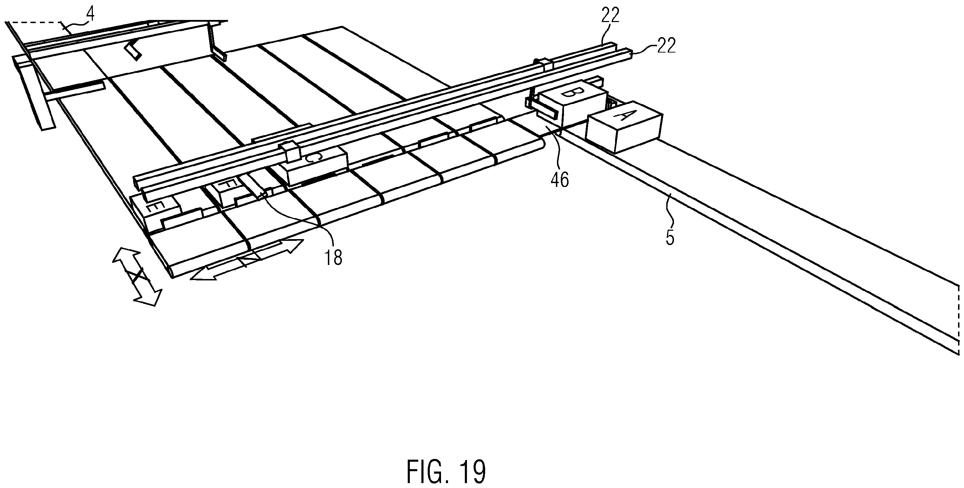

Fig. 20 der Zeichnung zeigt, dass in einem nächsten Arbeitsschritt die Ladeeinheit "C" zur Beförderung auf das Vereinzelungsband 25 freigegeben wurde und dort vom Schieberarm 18, der sich in Fig. 19 der Zeichnung noch in der nach hinten verschwenkten Stellung befindet, in welcher er über die Ladeeinheit "B" bewegt werden konnte, übernommen wird und zwar zur Verlagerungsbewegung der Ladeeinheit "C" auf die Schiebeplatte 46, von der die Ladeeinheit "C" dann mittels des Schiebers 47 auf die Fördereinrichtung 5 befördert werden kann, auf der dann die Ladeeinheiten "A", "B" und "C" in der richtigen Reihenfolge angeordnet sind, wie dies anhand von Fig. 23 der Zeichnung ersichtlich ist.

Fig. 23 schließlich zeigt, dass in der vorbeschriebenen Weise die Ladeeinheiten "A", "B", "C" und "D" auf die Fördereinrichtung 5 befördert wurden, die Ladeeinheiten dort also in der für die weitere Bearbeitung vorgesehenen Reihenfolge vorliegen.

In ähnlicher Weise werden auch noch die weiteren Ladeeinheiten "E" und "F" verarbeitet, sodass sie schließlich auf der Fördereinrichtung 5 zur Anlage kommen und dort die in den Figuren gezeigten Ladeeinheiten "A", "B", "C", "D", "E" und "F" in der richtigen Reihenfolge sequenziert vorliegen.

Die erfindungsgemäße Vorrichtung 1 zeichnet sich unter anderem dadurch aus, dass die Querschieber 17 und 20 als Doppelschieber ausgebildet sind und jeweils zwei Schieberarme aufweisen, die alternierend betätigt werden, damit kann die Einlagerleistung beziehungsweise Auslagerleistung auf etwa 800 Gebinde pro Stunde erhöht werden. Dadurch, dass die Schieberarme relativ zu den Tragarmen beziehungsweise zu den Schieberarmen verschwenkbar angeordnet sind, also um einen Winkel von etwa 45 bis 90 Grad, vorzugsweise 75 Grad verschwenkt werden können, können die Schieberarme so bewegt werden, dass ein Schieberarm eine Verlagerungsbewegung am Gebinde durchführt, während der andere Schieberarm eine Rückfahrbewegung zum Übergabebereich durchführt, an dem der Schieberarm dann das nächste Gebinde entweder am Einlauf des ersten Bandes übernimmt oder das Gebinde beziehungsweise die Ladeeinheit an der jeweiligen Aufnahme beziehungsweise dem jeweiligen Vereinzelungsband übernimmt.

Der erfindungsgemäßen Vorrichtung zur Sequenzierung kann eine nicht näher dargestellte automatische Vorrichtung zur Palettierung der Ladeeinheiten nachgeordnet sein, über die Anzahl und Länge der Staubänder 7 der Sequenzierzone 6 kann die Aufnahmekapazität der Sequenzierzone an Ladeeinheiten verändert werden. Die Anschlageinrichtungen 42 am jeweiligen Endbereich der Staubänder können beispielsweise mittels Pneumatikzylinder bewegt werden, also abgesenkt und wieder angehoben werden, das jeweilige Vereinzelungsband 25 weist eine höhere Fördergeschwindigkeit auf als das entsprechende Stauband 7, die Anschlageinrichtung 42 kann daher wieder angehoben werden zur Anlage einer nächsten Ladeeinheit, noch bevor diese in den Erfassungsbereich des Vereinzelungsband gerät.

Die erfindungsgemäße Vorrichtung zur Sequenzierung wird von einem nicht näher dargestellten Steuerrechner gesteuert, welcher die zu sequenzierenden Ladeeinheiten in einer vorbestimmten Reihenfolge freigibt, sodass die Staubänder und die Vereinzelungsbänder sowie die Querschieber entsprechend angesteuert werden können beispielsweise derart, dass die Reihenfolge der Sequenzierung auf der Basis des Gewichts der Ladeeinheit, der Art der Ladeeinheit und der Abmessung der Ladeeinheit gesteuert werden kann.

Auf diese Weise können schwere Ladeeinheiten auf der nicht näher dargestellten Palette beziehungsweise dem nicht näher dargestellten Rollcontainer dann zu unterst gestapelt werden, ein Stapel an Ladeeinheiten besitzt dann die schwerste Ladeeinheit unten, gefolgt von leichteren Ladeeinheiten oben, es ist auch eine artikelgleiche Steuerung der Stapelreihenfolge möglich.

Dadurch, dass erfindungsgemäß ein Doppel-Querschieber am Einlauf und/oder am Auslauf der Sequenzierzone vorgesehen ist, kann eine hohe Sequenzierleistung von mindestens 800 Gebinden pro Stunde erreicht werden. Der erfindungsgemäß vorgesehene Einsatz von Mattenketten als Bänder, Staubänder oder Vereinzelungsbändern sorgt dafür, dass die Schieberarme die jeweiligen Ladeeinheiten quer zu den Bändern, Staubändern und Vereinzelungsbänder an verschieben können, ohne dass eine Kollisionsgefahr der jeweiligen Unterseiten der Ladeeinheiten mit den Mattenketten besteht.

Der Einsatz von jeweils zwei sich ergänzenden Schieberarmen ergibt eine sehr hohe Durchsatzleistung, wie dies bereits erläutert wurde. Einer der Schieberarme platziert eine Ladeeinheit auf dem vorgegebenen Pufferband, während der andere Schieberarm bereits in Position gebracht wird für die Übernahme des nächsten Gebindes beziehungsweise den nächsten Ladeeinheit. Sobald der erste Schieberarm mit dem Gebinde oder der Ladeeinheit an dem vorbestimmten Band ankommt, kann der zweite Schieberarm, an dem sich die nächste Ladeeinheit schon angeordnet befindet, seine Verlagerungsbewegung zusammen mit dem Gebinde oder der Ladeeinheit starten. Der erste Schieberarm verschwenkt nach der Platzierung des Gebindes beziehungsweise der Ladeeinheit auf dem vorgegebenen Pufferband nach hinten und kann beim Zurückfahren zur Übergabeposition des nächsten Gebindes beziehungsweise der nächsten Ladeeinheit am sich bewegenden anderen Schieberarm vorbei bewegen, ohne dass die Gefahr einer Kollision des Schieberarms mit dem anderen Schieberarm beziehungsweise dem anderen Schieberarm mit der von diesem bewegten Ladeeinheit besteht.

Hinsichtlich vorstehen im Einzelnen nicht näher erläuterter Merkmale der Erfindung wird im Übrigen ausdrücklich auf die Patentansprüche und die Zeichnung verwiesen.

### Bezugszeichenliste

1. Vorrichtung
2. Ladeeinheit
3. Zuführeinrichtung
4. Zuführband
5. Fördereinrichtung
6. Sequenzierzone
7. Band, Bänder
8. Mattenband
9. Randbereich
10. Kante
11. Förderrichtung
12. Oberzuggurt
13. Unterzuggurt
14. Doppelpfeil
15. Erster Schieberarm
16. Zweiter Schieberarm
17. Erster Querschieber
18. Dritter Schieberarm
19. Vierter Schieberarm
20. Zweiter Querschieber
21. Erster Tragarm
22. Zweiter Tragarm
23. Vereinzelungseinrichtung
24. Aufnahme
25. Vereinzelungsband
26. Verteilungseinrichtung
27. erstes Band
28. Umsetzeinrichtung
29. Drehgelenk
30. Band
31. Übergabebereich
32. Anschlageinrichtung
33. Stopper
34. Drehgelenk
35. Zweites Band
36. Drehgelenk
37. Führung
38. Führungselement
39. Drehgelenk
40. Drehgelenk
41. Endbereich
42. Anschlageinrichtung
43. Stopper
44. Oberseite
45. Anschlageinrichtung
46. Schiebeplatte
47. Schieberarm
48. Drittes Band
49. Viertes Band

## Patentansprüche

1. Vorrichtung (1) zur Sequenzierung von Ladeeinheiten (2) in einer vorbestimmten Reihenfolge, mit einer Sequenzierzone (6) mit einer Mehrzahl von Bändern (7) zur Aufnahme von zu sequenzierenden Ladeeinheiten (2) und einer der Sequenzierzone (6) vorgelagerten Zuführeinrichtung (3) für Ladeeinheiten (2) sowie einer der Sequenzierzone (6) nachgelagerten Vereinzelungseinrichtung (23) mit Aufnahmen (24) für Ladeeinheiten (2), und einer die Ladeeinheiten (2) auf die Bänder (7) verteilenden Verteilungseinrichtung (26) sowie einer die vereinzelten Ladeeinheiten (2) in Richtung zu einer der Vorrichtung nachgelagerten Fördereinrichtung (5) befördernden Umsetzeinrichtung (28), wobei die Verteilungseinrichtung (26) und/oder die Umsetzeinrichtung (28) als Querschieber (17, 20) ausgebildet ist, welcher die Ladeeinheiten (2) quer zu den Bändern (7) oder Aufnahmen (24) verschiebt, wobei der Querschieber (17, 20) mindestens zwei relativ zueinander verschwenkbare Schieberarme (15, 16, 18, 19) aufweist, welche an oberhalb und quer zu den Bändern (7) oder Aufnahmen (27) angeordneten Tragarmen (21, 22) vorgesehen und entlang der Tragarme (21, 22) verlagerbar angeordnet sind und an den Ladeeinheiten (2) in Anlage bringbar sind.

2. Vorrichtung (1) nach Anspruch 1, **dadurch gekennzeichnet, dass** die Aufnahmen (24) in der Form von Vereinzelungsbändern (25) ausgebildet sind, welche die Ladeeinheiten (2) in den Erfassungsbereich des Querschiebers (17, 20) befördern.

3. Vorrichtung (1) nach einem der vorstehenden Ansprüche, **dadurch gekennzeichnet, dass** die Zuführeinrichtung (3) als Zuführband (4) ausgebildet ist und zwischen dem Zuführband (4) und einem dem Zuführband benachbarten Band (7, 27) der Sequenzierzone (6) eine Anschlageinrichtung (32) vorgesehen ist, an der auf das benachbarte Band (7, 27) beförderte Ladeeinheiten (2) in Anlage bringbar sind derart, dass diese bei laufendem Band (7, 27) daran in Anlage angeordnet verbleiben und mit dem Querschieber (17) in lösbaren Eingriff bringbar sind.

4. Vorrichtung (1) nach einem der vorstehenden Ansprüche, **dadurch gekennzeichnet, dass** am Endbereich (41) jedes Bands (7) der Sequenzierzone (6) benachbart zu der Aufnahme (24) eine Anschlageinrichtung (42) vorgesehen ist, welche relativ zum Band (7) verlagerbar ist derart, dass eine auf dem Band (7) angeordnete Ladeeinheit (2) bei verlagerter Anschlageinrichtung (42) vom laufenden Band (2) in Richtung zur Aufnahme (24) beförderbar ist.

5. Vorrichtung (1) nach einem der vorstehenden Ansprüche, **dadurch gekennzeichnet, dass** der Schieberarm (15, 16, 18, 19) relativ zum Tragarm (21, 22) verschwenkbar ausgebildet ist und mittels der Schwenkbewegung an der Ladeeinheit (2) in Anlage bringbar ist und in der verschwenkten Stellung relativ zum anderen Schieberarm (15, 16, 18, 19) entlang des Tragarms (21, 22) verlagerbar ist.

6. Vorrichtung (1) nach einem der vorstehenden Ansprüche 2 bis 5, **dadurch gekennzeichnet, dass** die Fördergeschwindigkeit des jeweiligen Vereinzelungsbands (25) größer ist als die Fördergeschwindigkeit des jeweiligen Bands (7) der Sequenzierzone (6) und die Anschlageinrichtung (42) nach der Erfassung der Ladeeinheit (2) durch das Vereinzelungsband (25) relativ zum Band (7) der Sequenzierzone (6) in Anschlagstellung verlagert ist derart, dass eine vom Band (7) in Richtung zur Anschlageinrichtung (42) beförderte Ladeeinheit (2) daran in Anlage kommt.

7. Vorrichtung (1) nach einem der vorstehenden Ansprüche, **dadurch gekennzeichnet, dass** die Bänder (7) und die Aufnahmen (24) als Mattenketten (8) ausgebildet sind mit einem quer zur Förderrichtung der Bänder abgeschrägten Randbereich (9).

8. Verfahren der Sequenzierung von Ladeeinheiten (2) in einer vorbestimmten Reihenfolge, mittels einer Sequenzierzone (6) mit einer Mehrzahl von Bändern (7) zur Aufnahme von zu sequenzierenden Ladeeinheiten (2) und einer der Sequenzierzone (6) vorgelagerten Zuführeinrichtung (3) für Ladeeinheiten (2) sowie einer der Sequenzierzone (6) nachgelagerten Vereinzelungseinrichtung (23) mit Aufnahmen (24) für Ladeeinheiten (2), und einer die Ladeeinheiten (2) auf die Bänder (7) verteilenden Verteilungseinrichtung (26) sowie einer die vereinzelten Ladeeinheiten (2) in Richtung zu einer der Vorrichtung nachgelagerten Fördereinrichtung (5) befördernden Umsetzeinrichtung (28), wobei die Ladeeinheiten (2) mittels eines Querschiebers (17) relativ zu den Bändern (7) der Sequenzierzone (6) verlagert werden, wobei der Querschieber (17, 20) zwei relativ zueinander verschwenkbare erste und zweite Schieberarme (15, 16, 18, 19) aufweist und die beiden Schieberarme (15, 16, 18, 19) an mindestens einem Tragarm (21, 22) quer zu der Förderrichtung der Bänder (7) der Sequenzierzone (6) verlagert werden, wobei einer der Schieberarme (15, 16) eine Ladeeinheit in Richtung zum jeweiligen Band (6) der Sequenzierzone befördert, während der andere Schieberarm (15, 16) in einer zum Tragarm (21) verschwenkten Stellung in Richtung zu einem der Zuführeinrichtung (3) benachbarten Band (7, 27) verlagert wird.

9. Verfahren nach Anspruch 8, **dadurch gekennzeichnet, dass** die Ladeeinheiten (2) mittels eines Querschiebers (20) relativ zu den Aufnahmen (24) der nachgelagerten Vereinzelungseinrichtung (23) verlagert werden.

## Claims

1. Apparatus (1) for sequencing loading units (2) in a predetermined order, comprising: a sequencing zone (6) having a plurality of belts (7) for receiving loading units (2) to be sequenced; and a feeding device (3), arranged upstream of the sequencing zone (6), for loading units (2); and a separation device (23), arranged downstream of the sequencing zone (6), having intakes (24) for loading units (2); and a distribution device (26) that distributes the loading units (2) onto the belts (7); and a relocation device (28) that conveys the separated loading units (2) towards a conveying device (5) located downstream of the apparatus, wherein the distribution device (26) and/or the relocation device (28) is/are designed as a transverse pusher (17, 20) which pushes the loading units (2) transversely to the belts (7) or intakes (24), the transverse pusher (17, 20) having at least two pusher arms (15, 16, 18, 19) pivotable relative to one another and which are provided on support arms (21, 22) arranged above and transversely to the belts (7) or intakes (27), are arranged so as to be moveable along the support arms (21, 22) and are designed to be brought into contact with the loading units (2).

2. Apparatus (1) according to claim 1, **characterised in that** the intakes (24) are designed in the form of separation belts (25) which convey the loading units (2) into the gathering area of the transverse pusher (17, 20).

3. Apparatus (1) according to one of the preceding claims, **characterised in that** the feeding device (3) is designed as a feeding belt (4), and provided between the feeding belt (4) and a belt (7, 27) of the sequencing zone (6) that is adjacent to the feeding belt is a stop device (32) with which loading units (2) conveyed onto the adjacent belt (7, 27) are designed to be brought into contact such that these loading units remain in contact therewith when the belt (7, 27) is running and are designed to be brought into releasable engagement with the transverse pusher (17).

4. Apparatus (1) according to one of the preceding claims, **characterised in that**, provided adjacent to the intake (24) at the end region (41) of each belt (7) of the sequencing zone (6) is a stop device (42) which is designed to move relative to the belt (7) such that, when the stop device (42) has moved, a loading unit (2) arranged on the belt (7) is designed to be conveyed by the running belt (2) towards the intake (24).

5. Apparatus (1) according to one of the preceding claims, **characterised in that** the pusher arm (15, 16, 18, 19) is designed to pivot relative to the support arm (21, 22) and is designed to be brought into contact with the loading unit (2) by means of the pivoting motion and, in the pivoted position, is designed to move along the support arm (21, 22) relative to the other pusher arm (15, 16, 18, 19).

6. Apparatus (1) according to one of the preceding claims 2 to 5, **characterised in that** the conveying speed of the respective separation belt (25) is greater than the conveying speed of the respective belt (7) of the sequencing zone (6), and, after the separation belt (25) has gathered the loading unit (2), the stop device (42) is moved into a stop position relative to the belt (7) of the sequencing zone (6) such that it comes into contact with a loading unit (2) conveyed by the belt (7) towards the stop device (42).

7. Apparatus (1) according to one of the preceding claims, **characterised in that** the belts (7) and the intakes (24) are designed as modular chains (8) with an edge region (9) that is bevelled transverse to the conveying direction of the belts.

8. Method for sequencing loading units (2) in a predetermined order, by means of a sequencing zone (6) having a plurality of belts (7) for receiving loading units (2) to be sequenced; and a feeding device (3), arranged downstream of the sequencing zone (6), for loading units (2); and a separation device (23), arranged downstream of the sequencing zone (6), having intakes (24) for loading units (2); and a distribution device (26) that distributes the loading units (2) onto the belts (7); and a relocation device (28) that conveys the separated loading units (2) towards a conveying device (5) located downstream of the apparatus, wherein the loading units (2) are moved relative to the belts (7) of the sequencing zone (6) by means of a transverse pusher (17), the transverse pusher (17, 20) having two first and second pusher arms (15, 16, 18, 19) pivotable relative to one another, and the two pusher arms (15, 16, 18, 19) are moved on at least one support arm (21, 22) transversely to the conveying direction of the belts (7) of the sequencing zone (6), wherein one of the pusher arms (15, 16) conveys a loading unit towards the respective belt (6) of the sequencing zone, while the other pusher arm (15, 16), when it is in a position pivoted with respect to the support arm (21), is moved towards a belt (7, 27) adjacent to the feeding device (3).

9. Method according to claim 8, **characterised in that** the loading units (2) are moved relative to the intakes (24) of the downstream separation device (23) by means of a transverse pusher (20).

## Revendications

1. Système (1) de séquencement d'unités de chargement (2) dans un ordre prédéterminé, comportant une zone de séquencement (6) présentant une pluralité de tapis (7) pour recevoir des unités de chargement (2) à séquencer, un dispositif d'amenée (3) d'unités de chargement (2) situé en amont de la zone de séquencement (6), ainsi qu'un dispositif de dissociation (23) situé en aval de la zone de séquencement (6) et présentant des plages de réception (24) pour les unités de chargement (2), et un dispositif de distribution (26) qui distribue les unités de chargement (2) vers les tapis (7) ainsi qu'un dispositif de transfert (28) qui transporte les unités de chargement (2) dissociées en direction d'un dispositif de transport (5) situé en aval du système, ledit dispositif de distribution (26) et/ou ledit dispositif de transfert (28) étant réalisés sous la forme d'un coulisseau transversal (17, 20) qui déplace les unités de chargement (2) transversalement aux tapis (7) ou aux plages de réception (24), ledit coulisseau transversal (17, 20) présentant au moins deux bras coulissants (15, 16, 18, 19) qui peuvent pivoter l'un par rapport à l'autre et qui sont prévus sur des bras de support (21, 22) disposés au-dessus et transversalement aux tapis (7) ou aux plages de réception (27) et sont disposés mobiles le long des bras de support (21, 22) et peuvent venir en contact avec les unités de chargement (2).

2. Système (1) selon la revendication 1, **caractérisé en ce que** les plages de réception (24) sont réalisées sous la forme de tapis de dissociation (25) qui transportent les unités de chargement (2) dans la zone de saisie du coulisseau transversal (17, 20).

3. Système (1) selon l'une des revendications précédentes, **caractérisé en ce que** le dispositif d'amenée (3) est réalisé sous la forme d'un tapis d'amenée (4) et **en ce qu'**il est prévu, entre le tapis d'amenée (4) et un tapis (7, 27) de la zone de séquencement (6) qui est voisin du tapis d'amenée, un dispositif d'arrêt (32) contre lequel les unités de chargement (2) transportées sur le tapis (7, 27) voisin peuvent venir buter et avec lequel elles demeurent en contact tandis que le tapis (7, 27) défile pour pouvoir être en prise momentanée avec le coulisseau transversal (17).

4. Système (1) selon l'une des revendications précédentes, **caractérisé en ce qu'**il est prévu, au voisinage de la plage de réception (24), un dispositif d'arrêt (42) au niveau de la zone terminale (41) de chaque tapis (7) de la zone de séquencement (6), lequel dispositif d'arrêt peut être déplacé par rapport au tapis (7) de telle façon qu'une unité de chargement (2) disposée sur le tapis (7) peut être déplacée, du tapis (2) qui défile, vers la plage de réception (24), sous l'effet d'un déplacement du dispositif d'arrêt (42).

5. Système (1) selon l'une des revendications précédentes, **caractérisé en ce que** le bras coulissant (15, 16, 18, 19) est conçu pour pouvoir pivoter par rapport au bras de support (21, 22) et peut venir en contact avec l'unité de chargement (2), sous l'effet du mouvement de pivotement, et, en position pivotée, peut être déplacé par rapport à l'autre bras coulissant (15, 16, 18, 19) le long du bras de support (21, 22).

6. Système (1) selon l'une des revendications précédentes 2 à 5, **caractérisé en ce que** la vitesse de transport du tapis de dissociation (25) respectif est supérieure à la vitesse de transport du tapis (7) respectif de la zone de séquencement (6) et **en ce que** le dispositif d'arrêt (42) peut passer en position de butée par rapport au tapis (7) de la zone de séquencement (6), après la saisie de l'unité de chargement (2) par le tapis de dissociation (25), de telle façon qu'une unité de chargement (2) transportée par le tapis (7) en direction du dispositif d'arrêt (42) vient en butée contre ledit dispositif d'arrêt.

7. Système (1) selon l'une des revendications précédentes, **caractérisé en ce que** les tapis (7) et les plages de réception (24) sont conçus sous forme de tapis modulaires (8) présentant une zone de bord (9) biseautée transversalement au sens de transport des tapis.

8. Procédé de séquencement d'unités de chargement (2) dans un ordre prédéterminé, au moyen d'une zone de séquencement (6) présentant une pluralité de tapis (7) pour recevoir des unités de chargement (2) à séquencer, d'un dispositif d'amenée (3) d'unités de chargement (2) situé en amont de la zone de séquencement (6), ainsi que d'un dispositif de dissociation (23) situé en aval de la zone de séquencement (6) et présentant des plages de réception (24) pour les unités de chargement (2), et d'un dispositif de distribution (26) qui distribue les unités de chargement (2) vers les tapis (7) et d'un dispositif de transfert (28) qui transporte les unités de chargement (2) dissociées en direction d'un dispositif de transport (5) situé en aval du système, lesdites unités de chargement (2) étant déplacées par rapport aux tapis (7) de la zone de séquencement (6) au moyen d'un coulisseau transversal (17), ledit coulisseau transversal (17, 20) présentant deux - un premier et un deuxième - bras coulissants (15, 16, 18, 19) qui peuvent pivoter l'un par rapport à l'autre, et lesdits deux bras coulissants (15, 16, 18, 19), sur au moins un bras de support (21, 22), étant déplacés transversalement au sens de transport des tapis (7) de la zone de séquencement (6), l'un des bras coulissants (15, 16) transportant une unité de chargement en direction du tapis (6) respectif de la zone de séquençage, tandis que l'autre bras coulissant (15, 16) est déplacé dans une position pivotée par rapport au bras de support (21), en direction d'un tapis (7, 27) qui est voisin du dispositif d'amenée (3).

9. Procédé selon la revendication 8, **caractérisé en ce que** les unités de chargement (2) sont déplacées, au moyen d'un coulisseau transversal (20), par rapport aux plages de réception (24) du dispositif de dissociation (23) aval.
